(19) Europäisches Patentamt

European Patent Office

Office européen des brevets

(11) **EP 1 686 593 A1**

(12) **EUROPEAN PATENT APPLICATION**
published in accordance with Art. 158(3) EPC

(43) Date of publication:
02.08.2006 Bulletin 2006/31

(51) Int Cl.:
*G21C 17/00* (2006.01)          *G21D 3/00* (2006.01)
*F01D 17/24* (2006.01)          *F01K 23/10* (2006.01)
*H02P 9/04* (2006.01)

(21) Application number: 04793313.0

(22) Date of filing: 27.10.2004

(86) International application number:
PCT/JP2004/016280

(87) International publication number:
WO 2005/041209 (06.05.2005 Gazette 2005/18)

(84) Designated Contracting States:
**AT BE BG CH CY CZ DE DK EE ES FI FR GB GR HU IE IT LI LU MC NL PL PT RO SE SI SK TR**

(30) Priority: 29.10.2003 JP 2003369619

(71) Applicant: **The Tokyo Electric Power Co., Inc.**
**Tokyo 100-8560 (JP)**

(72) Inventors:
• **UMEZAWA, Shuichi**
**Chiyoda-Ku**
**Tokyo 100-8560 (JP)**
• **YAMAMOTO, Takumi**
**Chiyoda-Ku**
**Tokyo 100-8560 (JP)**

(74) Representative: **Kramer - Barske - Schmidtchen**
**Radeckestrasse 43**
**81245 München (DE)**

(54) **THERMAL EFFICIENCY DIAGNOSING SYSTEM FOR NUCLEAR POWER PLANT, THERMAL EFFICIENCY DIAGNOSING PROGRAM FOR NUCLEAR POWER PLANT, AND THERMAL EFFICIENCY DIAGNOSING METHOD FOR NUCLEAR POWER PLANT**

(57)    A nuclear power plant thermal efficiency diagnostic system 10 comprises: a feed-and-condensate-water-flow-rate-setting-means 13 for setting a flow rate of feedwater tentatively; a heat-exchange-on-heater-calculating-means 14 for calculating heat exchange quantities of the feedwater and the condensate water on a heater; a HP turbine power calculating means 15 for acquiring a calculated power value of a high pressure turbine ; a HP turbine power correcting means 16 for making the calculated power value of the high pressure turbine corrected; a HP turbine internal efficiency calculating means 17 for calculating an internal efficiency of the high pressure turbine; a steam condition on LP turbine inlet calculating means 18 for setting a condition of a steam on an inlet of a low pressure turbine; a LP turbine power calculating means 21 for acquiring a calculated power value of the low pressure turbine; a LP turbine power correcting means 22 for making the calculated power value of the low pressure turbine corrected; a LP turbine internal efficiency calculating means 23 for calculating an internal efficiency of the low pressure turbine; and a performance-deteriorating-element-specifying-means 25 for specifying an element which causes on deterioration of performance of the nuclear power plant.

FIG. 1

**Description**

TECHNICAL FIELD

The present invention relates to a nuclear power plant thermal efficiency diagnostic system, a nuclear power plant thermal efficiency diagnostic program and a nuclear power plant thermal efficiency diagnostic method, and more particularly, to a nuclear power plant thermal efficiency diagnostic system, a nuclear power plant thermal efficiency diagnostic program and a nuclear power plant thermal efficiency diagnostic method for making a diagnosis on a performance of each machinery in order to specify machinery which causes deterioration of a power output from a nuclear power plant.

BACKGROUND ART

How to improve thermal efficiency in a power-generating plant such as a nuclear power plant or a thermal power plant is increasingly importance from the viewpoint of saving fuel and reducing costs of power generation.

However, a general power-generating plant includes plural elements such as HP (high-pressure) turbine and LP (low-pressure) turbines. Thus, if the total thermal efficiency of the power-generating plant decreases, it is difficult to accurately calculate performance of the individual elements. It is accordingly difficult to specify and determine an element that causes a drop in the thermal efficiency in the power-generating plant.

To that end, conventionally, a thermal efficiency diagnostic apparatus 1 for a thermal power plant as shown in Fig. 11 has been proposed (see, for example, Japanese Patent Application (Laid-Open) No.2002-122005). The conventional thermal efficiency diagnostic apparatus 1 for a thermal power plant includes a computer 2 and sensors 3. The sensors 3 measure parameters such as steam flow rates, flow rates of steams extracted from turbines and pressures of the elements such as the HP turbine and the LP turbine, and the computer 2 reads measured data.

The computer 2 has an A/D (analog to digital) converter 4, a CPU (Central Processing Unit) 5, and a memory 6 built-in, and includes an input device 7 and a monitor 6. The CPU 5 reads a program stored in the memory 6, and the CPU 5 reading program functions as a deteriorating element specifying means 9.

The measurement data read into the computer 2 are converted into digital signals by the A/D converter 4, and the deteriorating element specifying means 9 can specify element that deteriorates thermal efficiency based on the measurement data on each element, which has been converted into the digital signal.

The deteriorating element specifying means 9 conducts the optimal state using several probability distributions so that a deviation of the measurement data is minimized in the entire power-generating plant while a probability is maximized, and makes low-accuracy measurement data to be converged. As a result of convergent calculation of the measurement data executed by the deteriorating element specifying means 9, an influence of an error in the low-accuracy measurement data can be reduced.

Further, the deteriorating element specifying means 9 calculates thermal efficiency of each element based on the measurement data. Then, the degree of contribution of each element to the power-generating plant in the total thermal efficiency of the power-generating plant is additionally determined. The deteriorating element specifying means 9 specifies element that deteriorates thermal efficiency based on the degree of contribution of each element and the performance of each element.

With the conventional thermal efficiency diagnostic apparatus 1 for a thermal power plant, when the thermal efficiency of the thermal power plant decreases, the performance of each element can be accurately calculated to specify which element causes the decrease in thermal efficiency of the thermal power plant.

On the other hand, the nuclear power plant is configured to introduce steam generated in a reactor into a turbine equipment to generate power. Further, the turbine equipment is configured such as the HP turbine and the LP turbine are connected to a same generator through a common power transmission shaft.

Further, the nuclear power plant has been conventionally obliged to be operated with a constant electric power (about 1100,000 kW). However, since 2002, the plant is allowed to be operated with a constant thermal power, that is, with the constant thermal quantity supplied from the reactor to the turbine equipment. Thus, electric power of the entire nuclear power plant can be improved by improving the performance of the turbine equipment. In practice, however, as a result of operation under the condition of a constant thermal output in nuclear power plants, electric output of each power plant is various output.

To improve the plant output, it is important that the performance of individual elements in the turbine equipment is diagnosed in the nuclear power plant as well to thereby specify dominant elements that cause a drop in the thermal efficiency of the nuclear power plant.

However, steam used as a power source of the HP turbine and the LP turbine of the nuclear power plant is in a wet state unlike steam used in the thermal power plant or other such plants. Hence, the dryness of steam is different between the outlets and inlets of the HP turbine and the LP turbine, so only measuring a temperature and pressure of the steam is insufficient for precisely calculating enthalpy of the steam. As a result, it is difficult to accurately calculate internal efficiencies of the HP turbine and the LP turbine of the nuclear power plant to grasp a turbine performance.

Further, unlike the thermal power plant, parts of drains and steams are extracted from the HP turbine and the LP turbine of the nuclear power plant and used for heat exchanges on heaters.

Therefore, it is difficult to apply the conventional thermal efficiency diagnostic apparatus 1 for a thermal power plant to the nuclear power plant whose system or element is different from the thermal power plant. As a result, a technique of diagnosing thermal efficiency of each element of the nuclear power plant to thereby specify which element causes a drop in an electric power has not been yet proposed.

SUMMARY OF THE INVENTION

The present invention has been made to solve such conventional problems, and it is an object of the present invention to provide a nuclear power plant thermal efficiency diagnostic system, a nuclear power plant thermal efficiency diagnostic program and a nuclear power plant thermal efficiency diagnostic method which can specify thermal elements causing deterioration of a power output by conducting a diagnosis on a thermal efficiency of a nuclear power plant.

The present invention provides a nuclear power plant thermal efficiency diagnostic system comprising: a feed-and-condensate-water-flow-rate-setting-means for setting a flow rate of at least one of feedwater and condensate water in a nuclear power plant tentatively ; a heat-exchange-on-heater-calculating-means for calculating heat exchange quantities of the feedwater and the condensate water on a heater arranged on a condensate and feedwater pipe of the nuclear power plant in accordance with the flow rate of at least the one of the feedwater and the condensate water, the flow rate being set by the feed-and-condensate-water-flow-rate-setting-means tentatively; a HP-turbine-power-calculating-means for acquiring a calculated power value of a high pressure turbine of the nuclear power plant by assuming a dryness on an outlet of the high pressure turbine and performing a heat balance calculation using a heat exchange quantity of either of the feedwater and the condensate water acquired by the heat-exchange-on-heater-calculating-means; a HP-turbine-power-correcting-means for making the HP-turbine-power-calculating-means correct the dryness on the outlet of the high pressure turbine to recalculate a power of the high pressure turbine when the calculated power value of the high pressure turbine is out of a threshold set on a basis of a reference power value of the high pressure turbine; a HP-turbine-internal-efficiency-calculating-means for calculating an internal efficiency of the high pressure turbine based on the calculated power value of the high pressure turbine; a steam-condition-on-LP-turbine-inlet-calculating-means for setting a condition of a steam on an inlet of a low pressure turbine of the nuclear power plant; a LP-turbine-power-calculating-means for acquiring a calculated power value of the low pressure turbine by assuming a reference expansion line of the low pressure turbine based on the condition of the steam on the inlet of the low pressure turbine and performing a heat balance calculation using a heat exchange quantity of either of the feedwater and the condensate water acquired by the heat-exchange-on-heater-calculating-means and the assumed reference expansion line of the low pressure turbine, the condition being set by the steam-condition-on-LP-turbine-inlet-calculating-means; a LP-turbine-power-correcting-means for making the LP-turbine-power-calculating-means correct the reference expansion line of the low pressure turbine to recalculate a power of the low pressure turbine when the calculated power value of the low pressure turbine is out of a threshold set on a basis of a reference power value of the low pressure turbine; a LP-turbine-internal-efficiency-calculating-means for calculating an internal efficiency of the low pressure turbine based on the calculated power value of the low pressure turbine; and a performance-deteriorating-element-specifying-means for specifying an element which causes deterioration of performance of the nuclear power plant based on the internal efficiency of the low pressure turbine calculated by the LP-turbine-internal-efficiency-calculating-means and the internal efficiency of the high pressure turbine calculated by the HP-turbine-internal-efficiency-calculating-means, as described in the claim 1 in an aspect to achieve the object.

The present invention also provides a nuclear power plant thermal efficiency diagnostic method comprising steps of: setting a flow rate of at least one of feedwater and condensate water in a nuclear power plant tentatively; calculating heat exchange quantities of the feedwater and the condensate water on a heater arranged on a condensate and feedwater pipe of the nuclear power plant in accordance with the flow rate of at least the one of the feedwater and the condensate water, the flow rate being set tentatively; acquiring a calculated power value of a high pressure turbine of the nuclear power plant by assuming a dryness on an outlet of the high pressure turbine and performing a heat balance calculation using a acquired heat exchange quantity of either of the feedwater and the condensate water ; correcting the dryness on the outlet of the high pressure turbine to recalculate a power of the high pressure turbine when the calculated power value of the high pressure turbine is out of a threshold set on a basis of a reference power value of the high pressure turbine; calculating an internal efficiency of the high pressure turbine based on the calculated power value of the high pressure turbine; setting a condition of a steam on an inlet of a low pressure turbine of the nuclear power plant; acquiring a calculated power value of the low pressure turbine by assuming a reference expansion line of the low pressure turbine based on the set condition of the steam on the inlet of the low pressure turbine and performing a heat balance calculation using an acquired heat exchange quantity of either of the feedwater and the condensate water and the assumed reference expansion line of the low pressure turbine; correcting the reference expansion line of the low pressure turbine to recalculate a power of the low pressure turbine when the calculated power value of the low pressure turbine is out of a threshold set on a basis of a reference power value of the low pressure turbine; calculating an internal efficiency of the low pressure turbine based on the calculated power value of the low pressure turbine; and specifying an element which causes deterioration of performance of the nuclear power plant based on the internal efficiency of the low pressure turbine and the internal efficiency of the high pressure turbine, as described in the claim 10 in an aspect to achieve the object.

The present invention also provides a nuclear power plant thermal efficiency diagnostic program allowing a computer to function as: a feed-and-condensate-water-flow-rate-setting-means for setting a flow rate of at least one of feedwater and condensate water in a nuclear power plant tentatively; a heat-exchange-on-heater-calculating-means for calculating heat exchange quantities of the feedwater and the condensate water on a heater arranged on a condensate and feedwater pipe of the nuclear power plant in accordance with the flow rate of at least the one of the feedwater and the condensate water, the flow rate being set by the feed-and-condensate-water-flow-rate-setting-means tentatively; a HP-turbine-power-calculating-means for acquiring a calculated power value of a high pressure turbine of the nuclear power plant by assuming a dryness on an outlet of the high pressure turbine and performing a heat balance calculation using a heat exchange quantity of either of the feedwater and the condensate water acquired by the heat-exchange-on-heater-calculating-means; a HP-turbine-power-correcting-means for making the HP-turbine-power-calculating-means correct the dryness on the outlet of the high pressure turbine to recalculate a power of the high pressure turbine when the calculated power value of the high pressure turbine is out of a threshold set on a basis of a reference power value of the high pressure turbine; a HP-turbine-internal-efficiency-calculating-means for calculating an internal efficiency of the high pressure turbine based on the calculated power value of the high pressure turbine; a steam-condition-on-LP-turbine-inlet-calculating-means for setting a condition of a steam on an inlet of a low pressure turbine of the nuclear power plant; a LP-turbine-power-calculating-means for acquiring a calculated power value of the low pressure turbine by assuming a reference expansion line of the low pressure turbine based on the condition of the steam on the inlet of the low pressure turbine and performing a heat balance calculation using a heat exchange quantity of either of the feedwater and the condensate water acquired by the heat-exchange-on-heater-calculating-means and the assumed reference expansion line of the low pressure turbine, the condition being set by the steam-condition-on-LP-turbine-inlet-calculating-means; a LP-turbine-power-correcting-means for making the LP-turbine-power-calculating-means correct the reference expansion line of the low pressure turbine to recalculate a power of the low pressure turbine when the calculated power value of the low pressure turbine is out of a threshold set on a basis of a reference power value of the low pressure turbine; a LP-turbine-internal-efficiency-calculating-means for calculating an internal efficiency of the low pressure turbine based on the calculated power value of the low pressure turbine; and a performance-deteriorating-element-specifying-means for specifying an element which causes deterioration of performance of the nuclear power plant based on the internal efficiency of the low pressure turbine calculated by the LP-turbine-internal-efficiency-calculating-means and the internal efficiency of the high pressure turbine calculated by the HP-turbine-internal-efficiency-calculating-means, as described in the claim 11 in an aspect to achieve the object.

BRIEF DESCRIPTION OF THE DRAWINGS

Fig. 1 is a functional block diagram showing a nuclear power plant thermal efficiency diagnostic system according to an embodiment of the present invention;
Fig. 2 is a diagram showing an example of a boiling-water nuclear power plant as a target of thermal efficiency diagnosis made by the plant diagnostic system of Fig. 1;
Fig. 3 is a structural diagram showing an example of the HP turbine of Fig. 2.;
Fig. 4 is a bottom view showing positions of a steam extraction port and steam outlets of the HP turbine of Fig. 3;
Fig. 5 is a structural diagram showing an example of the LP turbine of Fig. 3;
Fig. 6 is a bottom view showing positions of steam extraction ports and steam outlets of the LP turbine of Fig. 5;
Fig. 7 is an enlarged sectional view showing a portion near the drain catcher provided to the LP turbine of Fig. 5;
Fig. 8 is a flowchart showing a procedure example of diagnosing thermal efficiency of the nuclear power plant in the case of applying the plant diagnostic system of Fig. 1 to the nuclear power plant of Fig. 2;
Fig. 9 shows an example of a reference expansion line and a corrected expansion line of the LP turbines in the h-s diagram assumed in the flowchart of Fig. 8.;
Fig. 10A shows an example of the probability distribution of the condensate water flow rate in the optimized calculation;
Fig. 10B shows an example of the probability distribution of the feedwater flow rate in the optimized calculation;
Fig. 10C shows an example of the probability distribution of the internal efficiency of the LP turbines in the optimized calculation; and

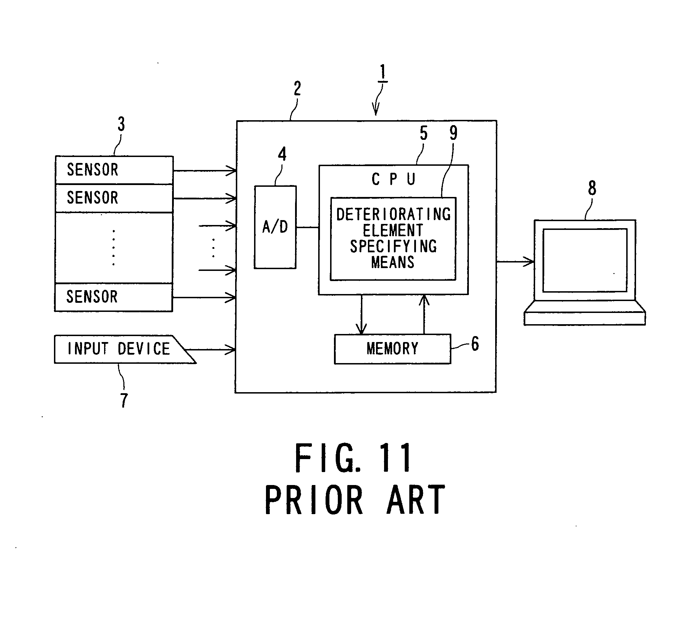

Fig. 11 is .a diagram of a conventional thermal efficiency diagnostic apparatus for a thermal power plant.

BEST MODE FOR CARRYING OUT THE INVENTION

A nuclear power plant thermal efficiency diagnostic system, a nuclear power plant thermal efficiency diagnostic program and a nuclear power plant thermal efficiency diagnostic method according to embodiments of the present invention will be described with reference to the accompanying drawings.

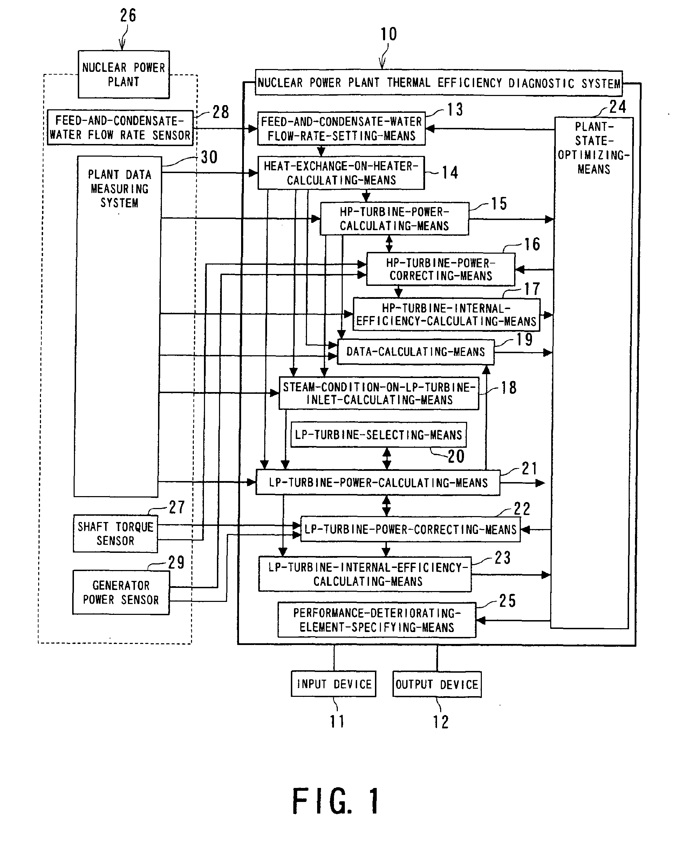

Fig. 1 is a functional block diagram showing a nuclear power plant thermal efficiency diagnostic system according to an embodiment of the present invention.

A nuclear power plant thermal efficiency diagnostic system 10 is constituted by reading a nuclear power plant thermal efficiency diagnostic program into an computer having an input device 11 and an output device 12 so as to function as a feed-and-condensate-water-flow-rate-setting-means 13, a heat-exchange-on-heater-calculating-means 14, a HP-turbine-power-calculating-means 15, a HP-turbine-power-correcting-means 16, a HP-turbine-internal-efficiency-calculating-means 17, a steam-condition-on-LP-turbine-inlet-calculating-means 18, a data-calculating-means 19, a LP-turbine-selecting-means 20, a LP-turbine-power-calculating-means 21, a LP-turbine-power-correcting-means 22, a LP-turbine-internal-efficiency-calculating-means 23, a plant-state-optimizing-means 24 and a performance-deteriorating-element-specifying-means 25.

A nuclear power plant 26 to which the nuclear power plant thermal efficiency diagnostic system 10 applies includes a shaft torque sensor 27, a feed-and-condensate-water-flow rate sensor 28, a generator power sensor 29 and a plant data measuring system 30. The nuclear power plant thermal efficiency diagnostic system 10 can read data about factors measured by the shaft torque sensor 27, the feed-and-condensate-water-flow rate sensor 28, the generator power sensor 29 and the plant data measuring system 30.

Note that, the nuclear power plant thermal efficiency diagnostic system 10 may receive data inputted to the input device 11 separately instead of reading data measured by the shaft torque sensor 27, the feed-and-condensate-water-flow rate sensor 28, the generator power sensor 29, and the plant data measuring system 30 directly.

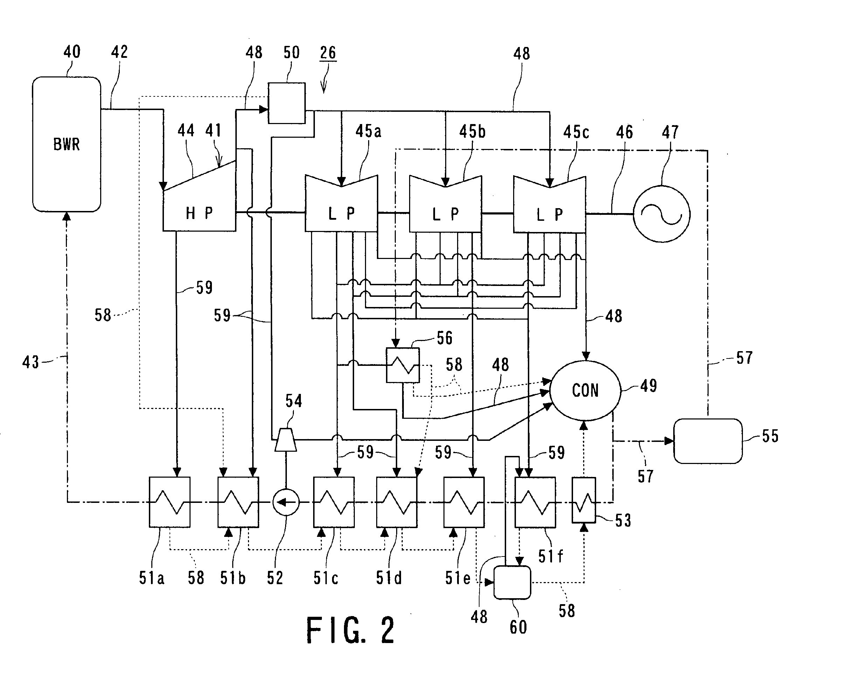

Fig. 2 is a diagram showing an example of a boiling-water nuclear power plant 26 as a target of thermal efficiency diagnosis made by the nuclear power plant thermal efficiency diagnostic system 10 of Fig. 1.

The nuclear power plant 26 is configured such that a reactor 40 and a turbine system 41 are connected through a main steam pipe 42 and a feed water pipe 43. The turbine system 41 is configured such that an HP turbine 44, a first LP turbine 45a, a second LP turbine 45b, and a third LP turbine 45c are provided to a common power transmission shaft 46, and the power transmission shaft 46 is connected with a generator 47. Each outlet of the first LP turbine 45a, the second LP turbine 45b, and the third LP turbine 45c is connected with a condenser 49 through a steam pipe 48.

Incidentally, in the illustrated example of Fig. 2, the three LP turbines 45 are provided, but the number of LP turbines may be arbitrarily set. Further, the number of condensers 49 is not limited to 1 but may be arbitrarily set.

An upstream side of the main steam pipe 42 is connected with an outlet of the reactor 40, and a downstream side of the main stream pipe 42 is connected with an inlet of the HP turbine 44 of the turbine system 41. Further, the outlet of the HP turbine 44 is connected with one end of the steam pipe 48, and the other end of the stream pipe 48 is branched and connected with inlets of the first LP turbine 45a, the second LP turbine 45b, and the third LP turbine 45c. A hygroscopic moisture separator 50 is provided on the steam pipe 48 provided at the outlet of the HP turbine 44.

Further, an upstream side of the feed water pipe 43 is connected with the heaters 51a, 51b, 51c, 51d, 51e and 51f and the condenser 49, and a downstream side of the feed water pipe 43 is connected with the inlet of the reactor 40 turbine system 41. A first heater 51a, a second heater 51b, a reactor feedwater pump 52, a third heater 51c, a fourth heater 51d, a fifth heater 51e, a sixth heater 51f, and a drain condenser 53 are provided onto the feed water pipe 43 in this order from the downstream side as the reactor 40 side. Further, the reactor feedwater pump 52 is provided with an RFP (reactor feedwater pump) turbine 54 for driving the reactor feedwater pump 52.

Incidentally, in the illustrated example of Fig. 2, the number of heaters 51 is 6 but may be arbitrarily set.

On the other hand, the nuclear power plant 26 includes a condensate storage tank 55 that stores the condensate water and a gland steam vaporizer 56 that vaporizes the condensate water in the condensate storage tank 55 to generate steam. The condensate storage tank 55 is connected with the feed water pipe 43 between the reactor 40 and the condenser 49, and the gland steam vaporizer 56 through a condensate water pipe 57. The gland steam vaporizer 56 is connected with the condenser 49 through the steam pipe 48 and a drain pipe 58. Then, the condensate water pipe 57 extending from the condensate storage tank 55 and the steam pipe 48 and the drain pipe 58 extending toward the condenser 49 are connected with one another in the gland steam vaporizer 56.

Further, the HP turbine 44 of the turbine system 41 includes an extraction steam pipe 59 extending toward the first heater 51a. The steam pipe 48 between the first heater 51a and the hygroscopic moisture separator 50 is connected with the extraction steam pipe 59 extending toward the second heater 51b.

Furthermore, the steam pipe 48 between the hygroscopic moisture separator 50 and the LP turbines 45a, 45b, and 45c is connected with the extraction steam pipe 59 extending toward the RFP turbine 54. The extraction steam pipe 59 extending toward the RFP turbine 54 is guided to the condenser 49 connected with the LP turbines 45a, 45b, and 45c by way of the RFP turbine 54.

The hygroscopic moisture separator 50 is provided with a drain tank (not shown), and the drain tank of the hygroscopic moisture separator 50 is connected with the second heater 51b through the drain pipe 58.

Further, the four extraction steam pipes 59 are connected with the first LP turbine 45a, the second LP turbine 45b, and the third LP turbine 45c. The upstream extraction steam pipe 59 is branched and guided to the third heater 51c and the gland steam vaporizer 56. The gland steam vaporizer 56 is connected with the fourth heater 51d through the drain pipe 58. The extraction steam pipe 59 extending from the first LP turbine 45a, the second LP turbine 45b, and the third LP turbine 45c to the gland steam vaporizer 56 is connected with the drain pipe 58 extending from the gland steam vaporizer 56 to the fourth heater 51d.

The second extraction steam pipe 59 as viewed from the upstream side, which is connected with each of the first LP turbine 45a, the second LP turbine 45b, and the third LP turbine 45c is guided to the fourth heater 51d. Further, the third and fourth extraction steam pipes 59 as viewed from the upstream side, which are connected with each of the first LP turbine 45a, the second LP turbine 45b, and the third LP turbine 45c are guided to the fifth heater 51e and the sixth heater 51f, respectively.

Moreover, the drain pipes 58 are provided between the first heater 51a and the second heater 51b, between the second heater 51b and the third heater 51c, between the third heater 51c and the fourth heater 51d, and between the fourth heater 51d and the fifth heater 51e respectively.

In addition, the drain pipe 58 is connected with each of the fifth heater 51e and the sixth heater 51f. The other end of each drain pipe 58 is connected with a common drain tank 60. The drain tank 60 is provided with the drain pipe 58 and the steam pipe 48. The other end of the drain pipe 58 is guided to the condenser 49 through the drain condenser 53, while the steam pipe 48 is guided to the sixth heater 51f. Each drain pipe 58 and the steam pipe 48 provided in the drain tank 60 are connected with each other in the drain tank 60.

Then, the extraction steam pipe 59 extending from the HP turbine 44 to the first heater 51a is connected with the drain pipe 58 extending toward the second heater 51b in the first heater 51a. Further, the extraction steam pipe 59 extending from the midpoint between the HP turbine 44 and the hygroscopic moisture separator 50 to the second heater 51b, the drain pipe 58 extending from the drain tank (not shown) of the hygroscopic moisture separator 50 to the second heater 51b, and the drain pipe 58 extending from the first heater 51a to the second heater 51b are each connected with the drain pipe 58 extending from the second heater 51b to the third heater 51c.

Further, the extraction steam pipe 59 extending from the first LP turbine 45a, the second LP turbine 45b, and the third LP turbine 45c to the third heater 51c, and the drain pipe 58 extending from the second heater 51b to the third heater 51c are each connected with the drain pipe 58 extending from the third heater 51c to the fourth heater 51d. The extraction steam pipe 59 extending from the first LP turbine 45a, the second LP turbine 45b, and the third LP turbine 45c to the fourth heater 51d, the drain pipe 58 extending from the gland steam vaporizer 56 to the fourth heater 51d, and the drain pipe 58 extending from the third heater 51c to the fourth heater 51d are connected with the drain pipe 58 extending from the fourth heater 51d to the fifth heater 51e.

Likewise, the extraction steam pipe 59 extending from the first LP turbine 45a, the second LP turbine 45b, and the third LP turbine 45c to the fifth heater 51e, and the drain pipe 58 extending from the fourth heater 51d to the fifth heater 51e are each connected with the drain pipe 58 extending from the fifth heater 51e to the drain tank 60. Further, the steam pipe 48 extending the drain tank 60 to the sixth heater 51f and the extraction steam pipe 59 extending from the first LP turbine 45a, the second LP turbine 45b, and the third LP turbine 45c to the sixth heater 51f are each connected with the drain pipe 58 extending from the sixth heater 51f to the drain tank 60.

In the nuclear power plant 26 thus configured, main steam generated in the reactor 40 is leaded to the inlet of the HP turbine 44 through the main steam pipe 42. The main steam works in the HP turbine 44 and then the steam is lead from the outlet of the HP turbine 44 to the hygroscopic moisture separator 50 through the steam pipe 48. Here, in the HP turbine 44, a part of the steam which worked is lead to the first heater 51a as extracted steam through the extraction steam pipe 59.

Moreover, a part of the steam lead from the outlet of the HP turbine 44 to the hygroscopic moisture separator 50 through the steam pipe 48 is lead to the second heater 51b through the extraction steam pipe 59 as extracted stream. Moisture contents of the steam lead into the hygroscopic moisture separator 50 are removed by the hygroscopic moisture separator 50, after which the steam is lead to the first LP turbine 45a, the second LP turbine 45b, and the third LP turbine 45c through the branched steam pipes 48. Further, a drain generated in the hygroscopic moisture separator 50 is lead to the second heater 51b through the drain pipe 58.

Here, a part of the steam is lead from the steam pipe 48 between the hygroscopic moisture separator 50 and the first LP turbine 45a, the second LP turbine 45b, and the third LP turbine 45c to the RFP turbine 54 through the extraction steam pipe 59 as extracted steam. The extracted steam lead to the RFP turbine 54 works in the RFP turbine 54, and is then lead to the condenser 49 and treated into a condensate water. As a result, the RFP turbine 54 is driven, and an output power of the RFP turbine 54 is used as a power for the reactor feedwater pump 52.

On the other hand, the steam lead into each of the first LP turbine 45a, the second LP turbine 45b, and the third LP turbine 45c works in the first LP turbine 45a, the second LP turbine 45b, and the third LP turbine 45c respectively and is then condensed into a condensate water by the condenser 49.

As a result, a turbine blade (not shown) is rotated together with the power transmission shaft 46 by the steam working in the HP turbine 44 and the first LP turbine 45a, the second LP turbine 45b, and the third LP turbine 45c. The rotation of the power transmission shaft 46 transmits a power to the generator 47 to thereby generate electric power.

Here, a part of the steam working in the first LP turbine 45a, the second LP turbine 45b, and the third LP turbine 45c is lead into the third heater 51c, the fourth heater 51d, the fifth heater 51e, the sixth heater 51f, and the gland steam vaporizer 56 through the extraction steam pipe 59 as extracted steam.

The extracted steam lead into the gland steam vaporizer 56 is turned into a drain through heat exchange with the condensate water lead from the condensate storage tank 55 to the gland steam vaporizer 56 and then lead to the fourth heater 51d. A part of the condensate water lead from the condensate storage tank 55 to the gland steam vaporizer 56 is turned into steam and lead to the condenser 49 through the steam pipe 48, while the rest is lead to the condenser 49 through the drain pipe 58 as a drain, not the steam.

On the other hand, condensate water generated in the condenser 49 is lead to the drain condenser 53 through the feed water pipe 43. Heat exchange is executed between the drain lead from the drain tank 60 to the condenser 49 and the condensate water to cool the drain in the drain condenser 53. The condensate water lead to the drain condenser 53 is led to the sixth heater 51f, the fifth heater 51e, the fourth heater 51d, and the third heater 51c in this order. In the sixth heater 51f, the fifth heater 51e, the fourth heater 51d, and the third heater 51c, heat exchange is executed between the condensate water and the extracted steams lead from the first LP turbine 45a, the second LP turbine 45b, and the third LP turbine 45c through the extraction steam pipes 59, the steam lead from the drain tank 60, and the drain lead from the second heater 51b, the third heater 51c, and the fourth heater 51d or the gland steam vaporizer 56 to heat the condensate water.

The drains resulting from the extracted steam or steam through the heat exchange with the condensate water in the sixth heater 51f, the fifth heater 51e, the fourth heater 51d, and the third heater 51c are discharged from the discharge-side drain pipes 58 respectively and finally lead into the drain tank 60.

Further, the condensate water passed through the third heater 51c is lead into the reactor feedwater pump 52 and pressurized as feedwater fed to the reactor 40. The feedwater pressurized in the reactor feedwater pump 52 is lead into the second heater 51b and the first heater 51a in this order, and heated with the extracted steam lead from the HP turbine 44 or the steam pipe 48 through the extraction steam pipe 59 or with the drain lead from the hygroscopic moisture separator 50 or the first heater 51a.

In the first heater 51a and the second heater 51b, the drain resulting from the extracted steam through the heat exchange with feedwater is discharged from the discharge-side drain pipe 58 and finally lead to the third heater 51c.

The feedwater heated by passing through the first heater 51a is lead to the reactor 40 and heated, and then lead to an inlet of the HP turbine 44 as main steam.

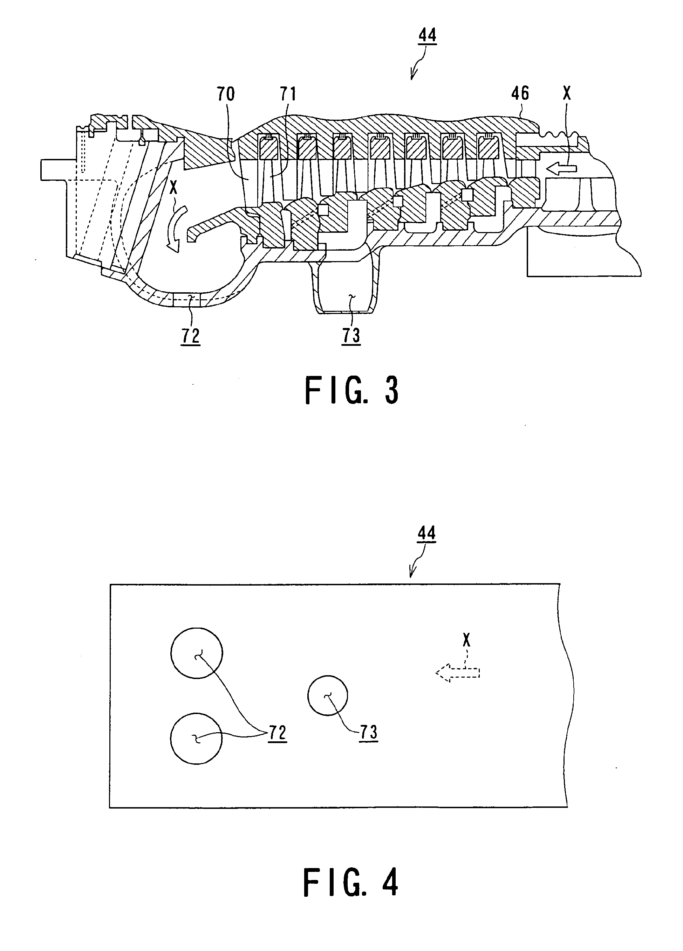

Fig. 3 is a structural diagram showing an example of the HP turbine 44 of Fig. 2. Fig. 4 is a bottom view showing positions of a steam extraction port and steam outlets of the HP turbine 44 of Fig. 3.

The HP turbine 44 is configured such that plural rotor blades 70 and stationary blades 71 are alternately provided. Each rotor blade 70 is inserted to the power transmission shaft 46 rotatably with the power transmission shaft 46. A steam X lead from the inlet side of the HP turbine 44 to the inside thereof is passed between each rotor blade 70 and each stationary blade 71 to work in the turbine. After that, the steam is discharged from a steam outlet 72.

Further, an extraction port 73 is provided between the inlet and the outlet 72 of the HP turbine 44, and a part of the steam X is lead to the first heater 51a from the extraction port 73 by way of the extraction steam pipe 59.

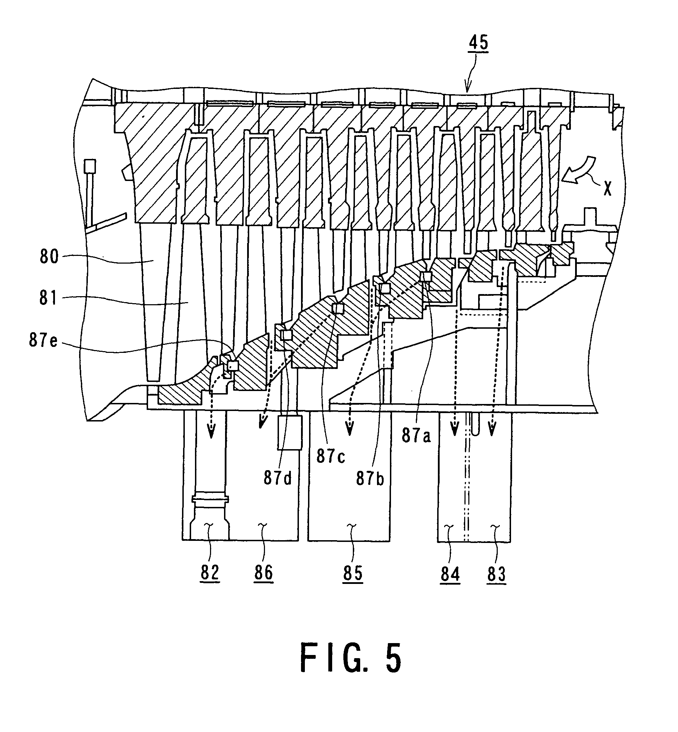

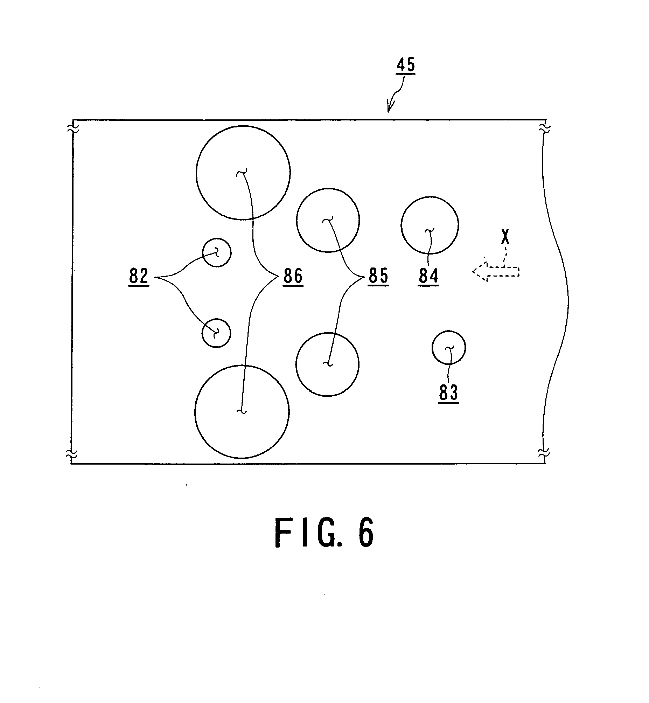

Fig. 5 is a structural diagram showing an example of the LP turbine 45 of Fig. 3. Fig. 6 is a bottom view showing positions of steam extraction ports and steam outlets of the LP turbine 45 of Fig. 5.

The LP turbine 45 is configured such that plural rotor blades 80 and plural stationary blades 81 are alternately provided like the HP turbine 44. Each rotor blade 80 is inserted to the power transmission shaft 46 rotatably with the power transmission shaft 46. The steam X lead from the inlet side of the LP turbine 45 to the inside thereof is passed between each rotor blade 80 and each stationary blade 81 and works. After that, the steam X is discharged from the discharge outlets 82.

Further, a first extraction port 83, a second extraction port 84, third extraction ports 85, and fifth extraction ports 86 are provided between the inlet and the outlets 82 of the LP turbine 45 in the order from the upstream side. Then, a part of the steam X in the LP turbine 45 is lead to the third heater 51c and the gland steam vaporizer 56 form the first extraction port 83 through the extraction steam pipe 59. Further, parts of the steam X in the LP turbine 45 are lead to the fourth heater 51d, the fifth heater 51e, and the sixth heater 51f from the second extraction port 84, the third extraction ports 85, and the fourth extraction ports 86 through the extraction steam pipes 59.

Further, the LP turbine 45 is provided with one or more drain catchers 87 for removing moisture in the steam X. Fig. 5 shows an example of the LP turbine 45 where 5 drain catchers 87, a first drain catcher 87a, a second drain catcher 87b, a third drain catcher 87c, a fourth drain catcher 87d, and a fifth drain catcher 87e are provided.

Further, the first drain catcher 87a, the third drain catcher 87c, and the fifth drain catcher 87e are configured such that a part of the steam is lead together with the drain to combine with the extracted steam discharged from the third extraction ports 85 and the fourth extraction ports 86 and the steam discharged from the outlets 82. On the other hand, it is unnecessary to consider an effect of removing a part of the steam for the second drain catcher 87b and the fourth drain catcher 87d.

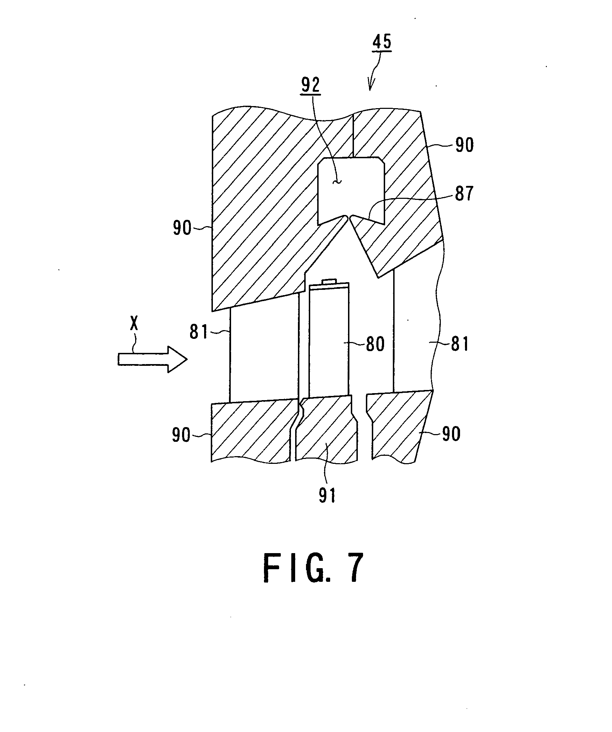

Fig. 7 is an enlarged sectional view showing a portion near the drain catcher 87 provided to the LP turbine 45 of Fig. 5.

Each stationary blade 81 of the LP turbine 45 is fixed with a diaphragm 90, while the rotor blade 80 is fixed to the power transmission shaft 46 by means of a disk 91. The drain catcher 87 that is V-shaped grooves in section is provided on the stationary blade 81 side near the tip end of the rotor blade 80. A steam separating chamber 92 is provided along the way of the drain catcher 87. The moisture caught by the drain catcher 87 is lead to the steam separating chamber 92 to thereby remove moisture contents of the steam X in the LP turbine 45.

In the nuclear power plant 26 as shown in Fig. 2, the shaft torque sensor 27 is provided to the power transmission shaft 46 that connects the HP turbine 44 with the first LP turbine 45a, the second LP turbine 45b, and the third LP turbine 45c. The shaft torque sensor 27A measures a shaft torque of at least one of the HP turbine 44, the first LP turbine 45a, the second LP turbine 45b, and the third LP turbine 45c. In this way, a measured shaft torque value F can be obtained.

In the case where the shaft torque sensor 27 is provided to an output shaft of the HP turbine 44, an actual measured value of a torque of the HP turbine 44 can be obtained as a measured shaft torque value. In contrast, in the case where the shaft torque sensor 27 is provided to each output shaft of the first LP turbine 45a, the second LP turbine 45b, and the third LP turbine 45c, actual measured values of torques of the first LP turbine 45a, the second LP turbine 45b, and the third LP turbine 45c can be obtained as measured shaft torque values.

The feed-and-condensate-water-flow rate sensor 28 is provided to the feed water pipe 43, and configured such that flow rates of feedwater lead to the reactor 40 and the condensate water can be measured.

The generator power sensor 29 functions to measure the electric power generated by the generator 47, that is, the total power of the nuclear power plant 26.

The plant data measuring system 30 includes plural sensors such as temperature sensors and pressure sensors, and is configured such as data about a factor necessary for diagnosing thermal efficiency of the nuclear power plant 26 among factors such as temperatures, pressures, and flow rates of steam, feedwater, condensate water, drain, and extracted steam at required positions of each element of the nuclear power plant 26 can be obtained.

The feed-and-condensate-water-flow-rate-setting-means 13 of the nuclear power plant thermal efficiency diagnostic system 10 has a function of setting an assumptive flow rate of feedwater or condensate water used for diagnosing the thermal efficiency of the nuclear power plant 26 based on a flow rate of feedwater or condensate water measured by the feed-and-condensate-water-flow rate sensor 28, and a function of informing the heat-exchange-on-heater-calculating-means 14 of the assumed flow rate of feedwater or condensate water.

Incidentally, the flow rate of feedwater or condensate water measured by the feed-and-condensate-water-flow rate sensor 28 may be directly used as the assumed flow rate of feedwater or condensate water. Alternatively, a value approximate to the flow rate measured by the feed-and-condensate-water-flow rate sensor 28 may be used as the assumed flow rate.

If receiving a request to renew a flow rate of feedwater or condensate water from the plant-state-optimizing-means 24, the feed-and-condensate-water-flow-rate-setting-means 13 is configured to set an assumptive flow rate of feedwater or condensate water again based on the information supplied from the plant-state-optimizing-means 24.

The heat-exchange-on-heater-calculating-means 14 has a function of calculating the quantities of heat exchanges of feedwater or condensate water at an inlet and an outlet of the first heater 51a, the second heater 51b, the third heater 51c, the fourth heater 51d, the fifth heater 51e, and the sixth heater 51f provided onto the feed water pipe 43 of the nuclear power plant 26 based on the assumed value of the flow rate of feedwater or condensate water supplied from the feed-and-condensate-water-flow-rate-setting-means 13.

That is, the heat-exchange-on-heater-calculating-means 14 has a function of calculating the enthalpies or specific enthalpies of feedwater or condensate water on the inlet and outlet of the first heater 51a, the second heater 51b, the third heater 51c, the fourth heater 51d, the fifth heater 51e, and the sixth heater 51f, and the enthalpy or specific enthalpy of drain at the outlet of the drain pipe 58 of each of the first heater 51a, the second heater 51b, the third heater 51c, the fourth heater 51d, the fifth heater 51e, and the sixth heater 51f, and a function of supplying necessary data out of the calculated enthalpies and specific enthalpies of the feedwater, condensate water, and drain in each of the first heater 51a, the second heater 51b, the third heater 51c, the fourth heater 51d, the fifth heater 51e, and the sixth heater 51f to the HP-turbine-power-calculating-means 15, the steam-condition-on-LP-turbine-inlet-calculating-means 18, and the LP-turbine-power-calculating-means 21.

Therefore, if the nuclear power plant 26 is configured as shown in Fig. 2, the deteriorating element specifying means 9 has the function of calculating the enthalpies or specific enthalpies of feedwater, condensate water, and drain of the first heater 51a, the second heater 51b, the third heater 51c, the fourth heater 51d, the fifth heater 51e, and the sixth heater 51f.

Incidentally, the heat-exchange-on-heater-calculating-means 14 is configured so as to receive data including the temperatures, pressures, and flow rates of feedwater, condensate water, and drain necessary for calculating the enthalpies or specific enthalpies from the plant data measuring system 30.

The HP-turbine-power-calculating-means 15 has a function of receiving data including the temperatures, pressures, and flow rates of steam, extracted steam, drain, feedwater, and condensate water at a required position of the nuclear power plant 26 from the plant data measuring system 30, and receiving necessary data out of the enthalpies and specific enthalpies of the feedwater, condensate water, and drain at each of the first heater 51a, the second heater 51b, the third heater 51c, the fourth heater 51d, the fifth heater 51e, and the sixth heater 51f from the heat-exchange-on-heater-calculating-means 14 and a function of assuming dryness on the outlet 72 of the HP turbine 44.

Further, the HP-turbine-power-calculating-means 15 has a function of performing a heat balance calculation, which is a balance calculation of the heat quantities of steam or extracted steam, based on assumed data or data input from the plant data measuring system 30 or the heat-exchange-on-heater-calculating-means 14 to determine a power of the HP turbine 44 and a function of supplying the calculated value of power of the HP turbine 44 obtained through the heat balance calculation to the HP-turbine-power-correcting-means 16.

Further, when receiving a request to recalculate a power of the HP turbine 44 and a request to correct the dryness of steam at the outlet 72 of the HP turbine 44 from the HP-turbine-power-correcting-means 16, the HP-turbine-power-calculating-means 15 is configured to correct the dryness of the steam to obtain the power of the HP turbine 44 again by the heat balance calculation and supply the calculated value of power of the HP turbine 44 to the HP-turbine-power-correcting-means 16.

Further, the HP-turbine-power-calculating-means 15 has a function of supplying to the steam-condition-on-LP-turbine-inlet-calculating-means 18 a flow rate of steam on the outlet 72 of the HP turbine 44 which is obtained in the course of the heat balance calculation of the power of the HP turbine 44.

Further, the HP-turbine-power-calculating-means 15 is configured to supply the calculated value of power of the HP turbine 44 to the plant-state-optimizing-means 24 if necessary.

The HP-turbine-power-correcting-means 16 has a function of receiving the calculated value of power of the HP turbine 44 from the HP-turbine-power-calculating-means 15 to compare an arbitrarily preset reference power value with the calculated value of the power of the HP turbine 44 and determine whether or not a difference or ratio between the reference power value of the HP turbine 44 and the calculated value of power is under a preset threshold value.

Here, as a method of setting a reference power value of the HP turbine 44, there are a setting method using a design value, a setting method using a measured power value of the HP turbine 44, and a setting method using an estimated value which can be obtained empirically.

In the case of using the measured value of the power of the HP turbine 44 as the reference power value of the HP turbine 44, for example, a measured shaft torque value of the HP turbine 44 or the LP turbines 45a, 45b, and 45c is inputted from the shaft torque sensor 27 to the HP-turbine-power-correcting-means 16, and the measured value of the power of the HP turbine 44 can be obtained based on the inputted measured shaft torque value.

At this time, if the measured shaft torque values of the first LP turbine 45a, the second LP turbine 45b, and the third LP turbine 45c is input from the shaft torque sensor 27, the HP-turbine-power-correcting-means 16 is configured to receive the total power of the nuclear power plant 26 measured by the generator power sensor 29 and subtract the measured shaft torque values of the first LP turbine 45a, the second LP turbine 45b, and the third LP turbine 45c from the total power of the nuclear power plant 26 to thereby indirectly obtain the measured value of power of the HP turbine 44.

The HP-turbine-power-correcting-means 16 has a function of sending the request to recalculate the power of the HP turbine 44 and the request to correct the dryness of the steam at the outlet 72 of the HP turbine 44 to the HP-turbine-power-calculating-means 15 and causing the HP-turbine-power-calculating-means 15 to execute recalculation to thereby correct the calculated value of power of the HP turbine 44 when determining that the difference or ratio between the measured value of power of the HP turbine 44 and the reference power value is not within the preset threshold value, while sending the calculated value of power of the HP turbine 44 to the HP-turbine-internal-efficiency-calculating-means 17 if determining that the difference or ratio between the measured value of power of the HP turbine 44 and the reference power value is within the preset threshold value.

The HP-turbine-internal-efficiency-calculating-means 17 has a function of calculating internal efficiency of the HP turbine 44 based on the corrected calculated value of power of the HP turbine 44 received from the HP-turbine-power-correcting-means 16 and data input from the plant data measuring system 30 and a function of sending the calculated internal efficiency of the HP turbine 44 to the plant-state-optimizing-means 24.

The steam-condition-on-LP-turbine-inlet-calculating-means 18 has a function of calculating each dryness of steam at the inlets of the first LP turbine 45a, the second LP turbine 45b, and the third LP turbine 45c based on a required one of the flow rate of steam at the outlet 72 of the HP turbine 44 received from the HP-turbine-power-calculating-means 15, the data received from the heat-exchange-on-heater-calculating-means 14, and the data input from the plant data measuring system 30 in accordance with the structure of the nuclear power plant 26, and a function of sending to the LP-turbine-power-calculating-means 21 the data on each calculated dryness of the steam at the inlets of the first LP turbine 45a, the second LP turbine 45b, and the third LP turbine 45c.

The steam-condition-on-LP-turbine-inlet-calculating-means 18 further has a function of receiving required data in accordance with the structure of the nuclear power plant 26 based on the results of calculation made by the plant data measuring system 30 or other such functional parts in the nuclear power plant thermal efficiency diagnostic system 10, optionally performing a heat balance calculation to determine the flow rate, temperature, pressure, and dryness of the steam at each inlet of the first LP turbine 45a, the second LP turbine 45b, and the third LP turbine 45c, and sending the determined data to the LP-turbine-power-calculating-means 21.

The data-calculating-means 19 has a function of receiving data about the temperature, pressure, and flow rate of each of steam, extracted steam, drain, feedwater, and condensate water measured by the plant data measuring system 30 or data about the results of calculation made by other functional parts of the nuclear power plant thermal efficiency diagnostic system 10 to calculate data necessary for diagnosing the thermal efficiency of the nuclear power plant 26 as for elements of the nuclear power plant 26 other than the HP turbine 44 and the first LP turbine 45a, the second LP turbine 45b, and the third LP turbine 45c. Further, the data-calculating-means 19 has a function of sending data serving as the calculation result to the plant-state-optimizing-means 24.

Examples of data calculated by the data-calculating-means 19 include the internal efficiency of the RFP turbine 54, the heat receiving quantity of the steam in the reactor 40, and flow rates of feedwater and condensate water lead to the reactor 40.

The LP-turbine-selecting-means 20 has a function of selecting a desired one from the first LP turbine 45a, the second LP turbine 45b, and the third LP turbine 45c and sending a request to calculate a power of the selected LP turbine 45 to the LP-turbine-power-calculating-means 21, while determining whether or not there is the LP turbine 45 of which the power has not been yet calculated in response to a notification that the calculation of the internal efficiency of the LP turbine 45 is completed, which is sent from the LP-turbine-internal-efficiency-calculating-means 23, and selecting the LP turbine 45 of which the power calculation has not been executed if any to send a request to calculate a power to the LP-turbine-power-calculating-means 21.

The LP-turbine-power-calculating-means 21 has a function of assuming a reference expansion line of the first LP turbine 45a, the second LP turbine 45b, and the third LP turbine 45c in a h-s diagram based on the data such as the temperature, pressure, flow rate, and dryness at each inlet of the first LP turbine 45a, the second LP turbine 45b, and the third LP turbine 45c, which are set by the steam-condition-on-LP-turbine-inlet-calculating-means 18.

Further, the LP-turbine-power-calculating-means 21 has a function of receiving necessary data from the heat-exchange-on-heater-calculating-means 14, inputting necessary data from the plant data measuring system 30 and obtaining a corrected expansion line and each power of the first LP turbine 45a, the second LP turbine 45b, and the third LP turbine 45c through the heat balance calculation based on the input or received data, design information, and the reference expansion line of the h-s diagram.

Further, the LP-turbine-power-calculating-means 21 sends each calculated value of the powers of the first LP turbine 45a, the second LP turbine 45b, and the third LP turbine 45c, which is obtained through the heat balance calculation, to the LP-turbine-power-correcting-means 22 while corrects the reference expansion line of the h-s diagram to obtain the corrected expansion line and each power of the first LP turbine 45a, the second LP turbine 45b, and the third LP turbine 45c through the heat balance calculation again if receiving a request to recalculate each power of the first LP turbine 45a, the second LP turbine 45b, and the third LP turbine 45c and a request to correct the reference expansion line of the h-s diagram from the LP-turbine-power-correcting-means 22.

Further, the LP-turbine-power-calculating-means 21 has a function of calculating efficiency of each stage group obtained by dividing the first LP turbine 45a, the second LP turbine 45b, and the third LP turbine 45c with the first extraction port 83 to the fourth extraction port 86, and the first drain catcher 87a to the fifth drain catcher 87e, and sending the efficiency of each stage group to the LP-turbine-internal-efficiency-calculating-means 23.

The LP-turbine-power-calculating-means 21 is configured to send the calculated value of each power of the first LP turbine 45a, the second LP turbine 45b, and the third LP turbine 45c to the plant-state-optimizing-means 24 if necessary.

The LP-turbine-power-correcting-means 22 has a function of receiving the calculated value of each power of the first LP turbine 45a, the second LP turbine 45b, and the third LP turbine 45c from the LP-turbine-power-calculating-means 21 to compare an arbitrarily preset reference power value of the first LP turbine 45a, the second LP turbine 45b, and the third LP turbine 45c with the calculated value of the power and determine whether or not a difference or ratio between the reference output value of the first LP turbine 45a, the second LP turbine 45b, and the third LP turbine 45c and the calculated value of power is within a preset threshold.

Here, the reference power value of the first LP turbine 45a, the second LP turbine 45b, and the third LP turbine 45c can be set based on data such as a design value or a measured power value similar to the reference power value of the HP turbine 44. Hence, in the case of using the measured power value as the reference power value of the first LP turbine 45a, the second LP turbine 45b, and the third LP turbine 45c, the measured power value of the first LP turbine 45a, the second LP turbine 45b, and the third LP turbine 45c can be obtained by inputting each measured shaft torque value of the HP turbine 44 or the first LP turbine 45a, the second LP turbine 45b, and the third LP turbine 45c from the shaft torque sensor 27.

At this time, if the measured shaft torque value input from the shaft torque sensor 27 is the measured shaft torque value of the HP turbine 44, the LP-turbine-power-correcting-means 22 configured to input the total power of the nuclear power plant 26 which is measured by the generator power sensor 29 and subtract the measured shaft torque value of the HP turbine 44 from the total power of the nuclear power plant 26 to thereby indirectly obtain the measured power value of the first LP turbine 45a, the second LP turbine 45b, and the third LP turbine 45c.

Further, it is possible to not only input and add the measured shaft torque values of the first LP turbine 45a, the second LP turbine 45b, and the third LP turbine 45c but also calculate the sum of the measured power values of the LP turbines 45 on the assumption that a measured shaft torque value input from one LP turbine 45 is equal to the shaft torque of another LP turbine 45.

Further, the LP-turbine-power-correcting-means 22 has a function of sending a request to recalculate each power of the first LP turbine 45a, the second LP turbine 45b, and the third LP turbine 45c and a request to correct the reference expansion line of the h-s diagram to the LP-turbine-power-calculating-means 21 to cause the LP-turbine-power-calculating-means 21 to execute recalculation such that a difference or ratio between the measured power value of the first LP turbine 45a, the second LP turbine 45b, and the third LP turbine 45c and the measured power value of the first LP turbine 45a, the second LP turbine 45b, and the third LP turbine 45c supplied from the LP-turbine-power-calculating-means 21 is within a threshold, to thereby correct the calculated value of each power of the first LP turbine 45a, the second LP turbine 45b, and the third LP turbine 45c.

Further, the LP-turbine-power-correcting-means 22 is configured to send an instruction to calculate each internal efficiency of the first LP turbine 45a, the second LP turbine 45b, and the third LP turbine 45c to the LP-turbine-internal-efficiency-calculating-means 23 if the difference or ratio between the measured power value of the first LP turbine 45a, the second LP turbine 45b, and the third LP turbine 45c and the calculated power value of the first LP turbine 45a, the second LP turbine 45b, and the third LP turbine 45c supplied from the LP-turbine-power-calculating-means 21 is within the threshold.

The LP-turbine-internal-efficiency-calculating-means 23 has a function of calculating each total internal efficiency of the first LP turbine 45a, the second LP turbine 45b, and the third LP turbine 45c based on efficiency of each stage group of the first LP turbine 45a, the second LP turbine 45b, and the third LP turbine 45c which is supplied from the LP-turbine-power-calculating-means 21, and sending each calculated internal efficiency of the first LP turbine 45a, the second LP turbine 45b, and the third LP turbine 45c to the plant-state-optimizing-means 24.

The plant-state-optimizing-means 24 has a function of receiving the calculated internal efficiencies of the HP turbine 44 and the first LP turbine 45a, the second LP turbine 45b, and the third LP turbine 45c from the HP-turbine-internal-efficiency-calculating-means 17 and the LP-turbine-internal-efficiency-calculating-means 23 respectively and receiving data, e.g., the internal efficiency of the RFP turbine 54, the heat receiving quantity of steam in the reactor 40, or the calculated value of flow rates of feedwater or condensate water lead into the reactor 40, necessary for diagnosing thermal efficiency of a target element of the nuclear power plant 26 from the data-calculating-means 19 to execute optimized calculation on each calculated value using an arbitrarily preset reference value, and determining whether or not the optimized calculation is completed, that is, whether or not each calculated value is optimized.

Here, as a reference value for the optimized calculation, data such as a design value or measured value can be used.

Further, the plant-state-optimizing-means 24 is configured to send a request to reset a flow rate of feedwater or condensate water to the feed-and-condensate-water-flow-rate-setting-means 13 if determining that each calculated value including a feedwater flow rate or the like is not optimized, while sends the optimized calculated values of the internal efficiency of the HP turbine 44 and the internal efficiencies of the first LP turbine 45a, the second LP turbine 45b, and the third LP turbine 45c to the performance-deteriorating-element-specifying-means 25 if determining that each calculated value is optimized.

Further, if an accuracy of the shaft torque sensor 27 is insufficient, for example, 1% or more, the plant-state-optimizing-means 24 is configured to optionally receive the calculated value of the power of the HP turbine 44 or each of the first LP turbine 45a, the second LP turbine 45b, and the third LP turbine 45c from one or both of the HP-turbine-power-calculating-means 15 and the LP-turbine-power-calculating-means 21 to optimize the calculated value of the power.

The plant-state-optimizing-means 24 issues a request to correct the dryness of the steam at the outlet 72 of the HP turbine 44 to the HP-turbine-power-calculating-means 15 if determining that the calculated value of the power of the HP turbine 44 is not optimized, while issues a request to correct the reference expansion line of the h-s diagram to the LP-turbine-power-calculating-means 21 if determining that the calculated value of each power of the first LP turbine 45a, the second LP turbine 45b, and the third LP turbine 45c is not optimized.

Here, a desired method may be used for optimization. For example, there is a method of statistically optimizing each calculated value of the feedwater flow rate and the like using a probability distribution. That is, each value of the feedwater flow rate or the like is calculated several times, and thus the probability distribution can be obtained, which shows a relation between a deviation of each calculated value from the reference value and the probability. Hence, it is possible to optimize each calculated value of the feedwater flow rate or the like based on the probability distribution.

Since plural calculated values should be optimized, probability distributions of calculated values are integrated to obtain a probability distribution. Then, calculated values at which the deviation is smallest in the integrated probability distribution may be used as the optimized calculated values. In this case, as for a probability distribution that can be assumed as a normal distribution or a probability distribution obtained by integrating the normal distribution, the normal distribution or the probability distribution obtained by integrating the normal distribution can be used. Then, calculated values that maximize the probability about all values in consideration of each calculated value are used as the optimized calculated values.

In the case of statistically optimizing the calculated values of the feedwater flow rate or the like using the probability distributions, if it is determined that the calculated values of the feedwater flow rate or the like are not optimized, the plant-state-optimizing-means 24 is configured to send a request to reset a flow rate of the feedwater or condensate water to the feed-and-condensate-water-flow-rate-setting-means 13 such that the deviation is minimized.

Incidentally, as the optimized calculation method, it is possible to only determine whether or not each calculated value of the feedwater flow rate or the like is within a threshold based on the preset reference value. In this case, the plant-state-optimizing-means 24 may not have a function of executing the optimized calculation.

The performance-deteriorating-element-specifying-means 25 has a function of calculating differences between optimized calculated values of the internal efficiency of the HP turbine 44 and each internal efficiency of the first LP turbine 45a, the second LP turbine 45b, and the third LP turbine 45c received from the plant-state-optimizing-means 24 and corresponding design values to specify a element showing the largest product of the difference between the calculated value and the design value by the preset degree of contribution. Here, the degree of contribution refers to how far each of the HP turbine 44, and the first LP turbine 45a, the second LP turbine 45b, and the third LP turbine 45c influences the efficiency of the nuclear power plant 26 in numeral terms.

The determination result from the performance-deteriorating-element-specifying-means 25 can be displayed on an output device 12 such as a monitor as appropriate.

Next, an operation of the nuclear power plant thermal efficiency diagnostic system 10 will be described.

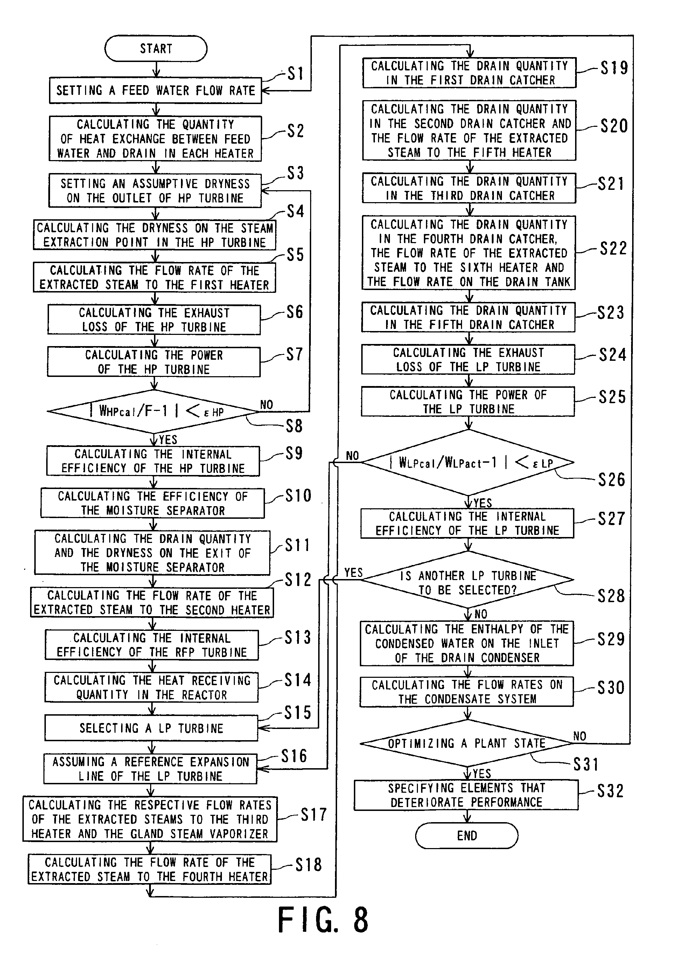

Fig. 8 is a flowchart showing a procedure example of diagnosing thermal efficiency of the nuclear power plant 26 in the case of applying the nuclear power plant thermal efficiency diagnostic system 10 of Fig. 1 to the nuclear power plant 26 of Fig. 2. In Fig. 8, reference numerals prefixed with "S" denote steps of the flowchart.

First, a flow rate GH1 of feedwater lead to the reactor 40 is measured by the feed-and-condensate-water-flow rate sensor 28, and the generator power sensor 29 measures electric power generated by the generator 47, that is, the total power WTOTAL of the nuclear power plant 26. Further, the plant data measuring system 30 measures a factor necessary for diagnosing thermal efficiency of the nuclear power plant 26 out of the factors such as the temperature, pressure, and flow rate of each of the steam, feedwater, condensate water, drain, and extracted steam at required positions of each element of the nuclear power plant 26.

Incidentally, the temperatures and pressures of the steam, feedwater, condensate water, drain, and extracted steam to be measured by the plant data measuring system 30 at each position of the nuclear power plant 26 can be measured with higher accuracy than accuracy necessary for diagnosing the thermal efficiency of the nuclear power plant 26. On the other hand, the accuracy for measuring each flow rate of the steam, drain, extracted steam, the feedwater, and the condensate water is lower than that for each of the temperatures or pressures.

Therefore, all or a part of the flow rates of the steam, drain, extracted steam, feedwater, and condensate water may be measured by the plant data measuring system 30 at each point of the nuclear power plant 26. In this example, however, measured values are used for values that are hardly calculated, and flow rates of steam and the like are obtained by calculation.

Further, the shaft torque sensor 27 measures the shaft torque of the HP turbine 44 for example. Thus, a measured shaft torque value F serving as an actual measured value of a power $W_{HP}$ of the HP turbine 44 is obtained.

In step S1, the feed-and-condensate-water-flow-rate-setting-means 13 receives the flow rate $G_{H1}$ of feedwater lead to the reactor 40 from the feed-and-condensate-water-flow rate sensor 28, and sets the assumptive flow rate as the feedwater flow rate $G_{H1}$ used for diagnosing the thermal efficiency of the nuclear power plant 26. That is, since accuracy of the feedwater flow rate $G_{H1}$ measured by the feed-and-condensate-water-flow rate sensor 28 is about 0.7%, the assumptive value is set. Further, the feed-and-condensate-water-flow-rate-setting-means 13 sends the thus-set assumptive feedwater flow rate $G_{H1}$ to the heat-exchange-on-heater-calculating-means 14.

Incidentally, it is possible to input the flow rate of condensate water in place of the feedwater to set the assumptive flow rate value.

Next, in step S2, the heat-exchange-on-heater-calculating-means 14 calculates a specific enthalpy of drain resulting from the heat exchange with the extracted steam and condensate water or feedwater in each of the first heater 51a, the second heater 51b, the third heater 51c, the fourth heater 51d, the fifth heater 51e, and the sixth heater 51f.

The heat-exchange-on-heater-calculating-means 14 receives the temperature and pressure of the drain at the outlet of each drain pipe 58 of the first heater 51a, the second heater 51b, the third heater 51c, the fourth heater 51d, the fifth heater 51e, and the sixth heater 51f from the plant data measuring system 30 upon calculating the specific enthalpy of the drain. Then, the heat-exchange-on-heater-calculating-means 14 calculates the specific enthalpy of the drain based on a steam table using the temperature and the pressure of the drain on the outlet of the drain pipe 58 in each of the first heater 51a, the second heater 51b, the third heater 51c, the fourth heater 51d, the fifth heater 51e, and the sixth heater 51f.

As the steam table, for example, a table released by the Japan Society of Mechanical Engineering may be used.

Further, the heat-exchange-on-heater-calculating-means 14 calculates the enthalpies of the condensate water and feedwater at the inlet and outlet of the feed water pipe 43 in each of the first heater 51a, the second heater 51b, the third heater 51c, the fourth heater 51d, the fifth heater 51e, and the sixth heater 51f using the feedwater flow rate $G_{H1}$ from the feed-and-condensate-water-flow-rate-setting-means 13.

The heat-exchange-on-heater-calculating-means 14 receives from the plant data measuring system 30 the temperatures and the pressures of the condensate water and feedwater at the inlet and outlet of the feed water pipe 43 in the first heater 51a, the second heater 51b, the third heater 51c, the fourth heater 51d, the fifth heater 51e, and the sixth heater 51f at the time of calculating the enthalpies of the condensate water and feedwater. Then, the heat-exchange-on-heater-calculating-means 14 calculates the specific enthalpies based on the temperatures and pressures of the condensate water and feedwater at the inlet and outlet of the feed water pipe 43 in each of the first heater 51a, the second heater 51b, the third heater 51c, the fourth heater 51d, the fifth heater 51e, and the sixth heater 51f to multiply this by the feedwater flow rate $G_{H1}$ to thereby calculate the enthalpies of the condensate water and the feedwater.

Further, the heat-exchange-on-heater-calculating-means 14 sends the enthalpies of the condensate water and feedwater and the specific enthalpy of the drain in the first heater 51a to the HP-turbine-power-calculating-means 15. The heat-exchange-on-heater-calculating-means 14 sends the enthalpies of the condensate water and feedwater and the specific enthalpy of the drain in the second heater 51b to the steam-condition-on-LP-turbine-inlet-calculating-means 18. The heat-exchange-on-heater-calculating-means 14 sends the enthalpies of the condensate water and feedwater and the specific enthalpies of the drains in the third heater 51c to the fifth heater 51f to the LP-turbine-power-calculating-means 21.

Next, in step S3, the HP-turbine-power-calculating-means 15 sets assumptive dryness of the steam at the outlet 72 of the HP turbine 44 based on a design value of the HP turbine 44 for heat balance calculation of the power $W_{HP}$ of the HP turbine 44.

Since the steam used in the nuclear power plant 26 is in a wet state, the dryness of the steam as well as the temperature and the pressure of the steam is necessary for calculating the enthalpy of the steam. To that end, the HP-turbine-power-calculating-means 15 sets assumptive dryness of the steam at the outlet 72 of the HP turbine 44 for calculating the heat quantity of the steam at the outlet 72 of the HP turbine 44.

However, an inaccurate design value is used for the steam dryness at the outlet 72 of the HP turbine 44 and thus the steam drynes is set as the assumptive value.

Next, in step S4, the HP-turbine-power-calculating-means 15 calculates dryness of extracted steam at the extraction port 73 of the HP turbine 44. That is, in the nuclear power plant 26 of Fig. 2, the extraction port 73 is provide to the HP turbine 44 to lead the extracted steam into the first heater 51a. Thus, for the heat balance calculation of the power $W_{HP}$ of the HP turbine 44, the quantity of heat of the extracted steam at the extraction port 73 of the HP turbine 44 must be determined.

To be exact, the internal efficiency from the inlet of the HP turbine 44 to the extraction port 73 is different from that from the extraction port 73 to the outlet 72. However, on the assumption that the HP turbine 44 operates with almost 100% load, an internal efficiency $\eta_{HP}$ of the HP turbine 44 is set constant from the inlet to the outlet 72 of the HP turbine 44 for calculation.

The dryness of the extracted steam at the extraction port 73 of the HP turbine 44 can be calculated based on the assumptive dryness of steam at the outlet 72 of the HP turbine 44 set in step S3 and the pressure at the extraction port 73.

That is, in the h-s (specific entropy - specific enthalpy) diagram, points of specific enthalpies $h_{HPin}$ and $h_{HPout}$ and specific entropies $S_{HPin}$ and $S_{HPout}$ at the inlet and the outlet 72 of the HP turbine 44 are first plotted based on the pressures and temperatures at the inlet and the outlet 72 of the HP turbine 44. Further, the point of the specific enthalpy $h_{HPin}$ and specific entropy $S_{HPin}$ at the inlet of the HP turbine 44 is connected with the point of the specific enthalpy $h_{HPout}$ and the specific entropy $S_{HPout}$ at the outlet 72 of the HP turbine 44 by straight lines. Then, an intersection between the obtained straight line and a constant-pressure line corresponding to a pressure at the extraction port 73 of the HP turbine 44 on the h-s diagram is detected, and the steam dryness at the detected intersection can be obtained as the dryness of the extracted steam at the extraction port 73 of the HP turbine 44 based on the steam table.

Incidentally, the temperatures and pressures of the steam at the inlet and the outlet 72 of the HP turbine 44 and the pressure of the extracted steam at the extraction port 73 of the HP turbine 44 necessary for calculating the dryness of the extracted steam at the extraction port 73 of the HP turbine 44 with the HP-turbine-power-calculating-means 15 are input from the plant data measuring system 30.

Next, in step S5, the HP-turbine-power-calculating-means 15 calculates a flow rate $G_{EXT}$ of the extracted steam for calculating the heat quantity of extracted steam necessary for executing a heat balance calculation of the power $W_{HP}$ of the HP turbine 44.

Here, a difference between the heat quantity of extracted steam lead to the first heater 51a and the heat quantity of the drain discharged from the drain pipe 58 is a loss in heat quantity of the extracted steam in the first heater 51a. The heat quantity of the extracted steam is calculated by multiplying the specific enthalpy $h_{EXT}$ of the extracted steam by the flow rate $G_{EXT}$ of the extracted steam. The heat quantity of drain is calculated by multiplying the specific enthalpy $h_P$ of the drain by the flow rate $G_{H1D}$ of the drain. Further, the flow rate $G_{H1D}$ of the drain can be calculated based on the flow rate $G_{EXT}$ of the extracted steam.

Further, the heat quantity that the extracted steam loses in the first heater 51a is equal to the heat quantity received by the feedwater in the first heater 51a. The heat quantity received by the feedwater in the first heater 51a is represented by a difference between enthalpies of feedwater at the inlet and the outlet of the first heater 51a.

Hence, it is possible to execute heat balance calculation on the flow rate $G_{EXT}$ of the extracted steam lead to the first heater 51a based on Expression (1):

$$G_{EXT} = \{G_{H1}(h_{Hout} - h_{Hin}) + G_{H1D}h_{EXT}\}/h_D \ \dots \ (1)$$

Where

> $G_{EXT}$: flow rate of extracted steam lead into the first heater
> $G_{H1}$: flow rate of feedwater in the first heater
> $G_{H1D}$: flow rate of drain discharged from first heater
> $h_{Hout}$: specific enthalpy of feedwater at the outlet of the first heater
> $h_{Hin}$: specific enthalpy of feedwater at the inlet of the first heater
> $h_D$: specific enthalpy of drain at the outlet of the first heater
> $h_{EXT}$: specific enthalpy of extracted steam at the inlet of the first heater

Here, the specific enthalpy $h_{EXT}$ of the extracted steam at the inlet of the first heater 51a may be assumed to be equal to the specific enthalpy of the extracted stream at the extraction port 73 of the HP turbine 44 calculated in step S4.

Further, the heat quantity received by the feedwater in the first heater 51a can be calculated based on the enthalpies, which is supplied from the heat-exchange-on-heater-calculating-means 14, of the feedwater at the inlet and outlet of the first heater 51a.

Hence, the HP-turbine-power-calculating-means 15 calculates the flow rate $G_{EXT}$ of the extracted stream using Expression (1) based on the data from the heat-exchange-on-heater-calculating-means 14 and the data from the plant data measuring system 30.

Next, in step S6, the HP-turbine-power-calculating-means 15 calculates an exhaust loss of the steam in the HP turbine 44, that is, a velocity energy of the steam that is not used for the rotation of a turbine blade in the HP turbine 44.

Incidentally, the exhaust loss of the steam is calculated based on a flow velocity of the steam at the outlet 72 of the HP turbine 44. The flow velocity of the steam can be calculated based on the flow rate of the steam and the sectional area of the outlet 72 in the HP turbine 44. The flow rate of the steam at the outlet 72 of the HP turbine 44 may be calculated by subtracting the flow rate $G_{EXT}$ of the exhausted steam lead to the first heater 51a from the flow rate $G_{HP}$ of the steam at the inlet of the HP turbine 44.

Next, in step S7, the HP-turbine-power-calculating-means 15 calculates the power of the HP turbine 44 through heat balance calculation. That is, the HP-turbine-power-calculating-means 15 receives the temperature and pressure at the inlet of the HP turbine 44 from the plant data measuring system 30 to calculate the specific enthalpy $h_{HPin}$ at the inlet of the HP turbine 44. Here, the assumptive dryness at the inlet of the HP turbine 44 may be used, as needed.

Further, the HP-turbine-power-calculating-means 15 receives the temperature and pressure at the outlet 72 of the HP turbine 44 to calculate the specific enthalpy $h_{HPout}$ at the outlet 72 of the HP turbine 44 based on the input temperature and pressure at the outlet 72 of the HP turbine 44, and the assumptive dryness at the outlet 72 of the HP turbine 44 set in step S3.

Next, the HP-turbine-power-calculating-means 15 multiplies the flow rate $G_{HP}$ of the steam at the inlet of the HP turbine 44 by the specific enthalpy $h_{HPin}$ of the steam at the inlet of the HP turbine 44 to calculate the heat quantity of the steam at the inlet of the HP turbine 44, and multiplies the flow rate of the steam at the outlet of the HP turbine 44 by the specific enthalpy $h_{HPout}$ of the steam at the outlet of the HP turbine 44 to calculate the heat quantity of the steam at the outlet of the HP turbine 44.

Here, the flow rate $G_{HP}$ of the steam at the inlet of the HP turbine 44 can be calculated based on the feedwater flow rate. The flow rate of the steam at the outlet 72 of the HP turbine 44 is calculated by subtracting the flow rate $G_{EXT}$ of the exhausted steam calculated in step S5 from the flow rate $G_{HP}$ of the steam at the inlet of the HP turbine 44.

Further, the HP-turbine-power-calculating-means 15 can calculate the heat quantity of the extracted steam by multiplying the flow rate $G_{EXT}$ of the extracted steam calculated in step S5 by the specific enthalpy of the extracted steam at the extraction port 73 of the HP turbine 44. The specific enthalpy of the extracted steam at the extraction port 73 of the HP turbine 44 can be calculated based on the steam table in accordance with the temperature, pressure, and dryness of the extracted steam at the extraction port 73 of the HP turbine 44.

Then, the HP-turbine-power-calculating-means 15 executes a energy balance calculation regarding as the heat quantities of the steam at the inlet and the outlet 72 of the HP turbine 44, the heat quantity of the extracted steam, and the exhaust loss of the steam in the HP turbine 44 calculated in step S6 to obtain a calculated power value $W_{HPcal}$ of the HP turbine 44.

The HP-turbine-power-calculating-means 15 sends the calculated power value $W_{HPcal}$ of the HP turbine 44 obtained through the heat balance calculation to the HP-turbine-power-correcting-means 16.

Next, in step S8, the HP-turbine-power-correcting-means 16 receives the measured shaft torque value F of the HP turbine 44 from the shaft torque sensor 27 and receives the calculated power value $W_{HPcal}$ of the HP turbine 44 from the HP-turbine-power-calculating-means 15 to compare the measured shaft torque value F of the HP turbine 44 with the calculated power value $W_{HPcal}$ of the HP turbine 44 to determine whether or not a difference or ratio between the measured shaft torque value F of the HP turbine 44 and the calculated power value $W_{HPcal}$ of the HP turbine 44 is within a preset threshold value $\varepsilon_{HP}$.

For example, the HP-turbine-power-correcting-means 16 determines whether or not the ratio between the measured shaft torque value F of the HP turbine 44 and the calculated power value $W_{HPcal}$ of the HP turbine 44 is within the preset threshold value $\varepsilon_{HP}$ (for example, $\varepsilon_{HP}$ = 0.5%) based on Expression (2).

$$| W_{HPcal}/F\text{-}1 | < \varepsilon_{HP} \dots (2)$$

Then, if it is determined that the ratio between the measured shaft torque value F of the HP turbine 44 and the calculated power value $W_{HPcal}$ of the HP turbine 44 is not within the preset threshold value $\varepsilon_{HP}$, that is, Expression (2) is not satisfied, the HP-turbine-power-correcting-means 16 sends a request to recalculate the power $W_{HP}$ of the HP turbine 44 and a request to correct the dryness of steam at the outlet 72 of the HP turbine 44 so as to satisfy Expression (2) to the HP-turbine-power-calculating-means 15.

Hence, the HP-turbine-power-calculating-means 15 sets the assumptive dryness of the steam at the outlet 72 of the HP turbine 44 in step S3 again, and the power of the HP turbine 44 is calculated from steps S4 to S7. As described above, the HP-turbine-power-calculating-means 15 repeats calculating the power of the HP turbine 44 until the ratio between the measured shaft torque value F of the HP turbine 44 and the calculated power value $W_{HPcal}$ of the HP turbine 44 is to be within the preset threshold value $\varepsilon_{HP}$.

In step S8, when the HP-turbine-power-correcting-means 16 determines that the ratio between the measured shaft torque value F of the HP turbine 44 and the calculated power value $W_{HPcal}$ of the HP turbine 44 is within the preset threshold value $\varepsilon_{HP}$, the HP-turbine-power-correcting-means 16 sends the calculated power value $W_{HPcal}$ of the HP turbine 44 to the HP-turbine-internal-efficiency-calculating-means 17.

Next, in step S9, the HP-turbine-internal-efficiency-calculating-means 17 calculates the internal efficiency $\eta HP$ of the HP turbine 44 based on the calculated power value $W_{HPcal}$, which is received from the HP-turbine-power-correcting-means 16, of the HP turbine 44 after correction and the data received from the plant data measuring system 30.

Here, the power $W_{HP}$ of the HP turbine 44 is expressed by Expression (3). However, the extracted steam is not taken into account for simplifying calculation. Accordingly, in order to improve the calculation accuracy, the power $W_{HP}$ of the HP turbine 44 may be calculated with taking account of the extracted steam.

$$W_{HP} = \Delta h_{HPad} \cdot G_{HP} \, \eta_{HP} \dots (3)$$

Where

$\Delta h_{HPad}$: adiabatic heat drop of the HP turbine
$G_{HP}$: steam flow rate at the inlet of the HP turbine
$\eta_{HP}$: internal efficiency of the HP turbine

That is, the power $W_{HP}$ of the HP turbine 44 can be calculated based on the product of the HP turbine adiabatic heat drop $\Delta h_{HPad}$ by the steam flow rate $G_{HP}$ at the inlet of the HP turbine 44, that is, with correction by multiplying the enthalpy change of the steam in the HP turbine 44 by the internal efficiency $\eta_{HP}$ of the HP turbine 44 in consideration of the loss of energy consumed for the entropy change in steam. Further, modifying Expression (3) gives Expression (4).

$$\eta_{HP} = W_{HP}/\Delta h_{HPad} \cdot G_{HP} \ \dots \ (4)$$

Here, the adiabatic heat drop $\Delta h_{HPad}$ of the HP turbine 44 is expressed as a difference between the specific enthalpy $h_{HPin}$ of the steam at the inlet of the HP turbine 44 and the specific enthalpy $h_{HPoutad}$ of the steam at the outlet 72 on the assumption that the steam is subjected to the isentropic change in the HP turbine 44 as indicated by Expression (5). That is, the adiabatic heat drop $\Delta h_{HPad}$ of the HP turbine 44 represents a work load of steam at the HP turbine 44 on the ideal state generating no energy loss.

$$\Delta h_{HPad} = h_{HPin} - h_{HPoutad} \ \dots \ (5)$$

Hence, if the pressures of the steam at the outlet 72 and inlet of the HP turbine 44 and the temperature of the steam at the inlet of the HP turbine 44 can be acquired, the specific enthalpy $h_{HPin}$ at the inlet of the HP turbine 44 and the specific enthalpy $h_{HPoutad}$ at the outlet 72 on the assumption that the steam is subjected to the isentropic change based on the h-s diagram can be calculated, and the adiabatic heat drop $\Delta h_{HPad}$ of the HP turbine 44 is calculated from Expression (5).

Then, the pressure of the steam at the inlet of the HP turbine 44, the pressure of the steam at the outlet 72 of the HP turbine 44, and the temperature of the steam at the inlet of the HP turbine 44 are measured by the plant data measuring system 30. Here, the assumptive dryness at the inlet of the HP turbine 44 may be set if necessary. Further, the steam flow rate $G_{HP}$ at the inlet of the HP turbine 44 may be a value calculated in step S7.

Then, the HP-turbine-internal-efficiency-calculating-means 17 receives the pressure of the steam at the inlet of the HP turbine 44, the pressure of the steam at the outlet 72 of the HP turbine 44, the temperature of the steam at the inlet of the HP turbine 44 from the plant data measuring system 30, and also receives the calculated power value $W_{HPcal}$ of the HP turbine 44 from the HP-turbine-power-correcting-means 16 to calculate the internal efficiency $\eta HP$ of the HP turbine 44 based on Expressions (4) and (5).

Incidentally, an accuracy of the internal efficiency $\eta HP$ of the HP turbine 44 calculated by the heat-exchange-on-heater-calculating-means 14 can be calculated using error propagation expression (6) derived from Expression (4).

$$\mid \delta \, \eta_{HP}/\eta_{HP} \mid \, = \, \mid \delta \, W_{HP}/W_{HP} \mid + \mid \delta \, \Delta h_{HPad}/\Delta h_{HPad} \mid + \mid \delta \, G_{HP}/G_{HP} \mid \dots \ (6)$$

Here, the accuracy of the internal efficiency $\eta_{HP}$ of the HP turbine 44 is calculated by substituting assumptive conditions into Expression (6) and the calculation result is represented by Expression (7).

$$\mid \delta \, W_{HP}/W_{HP} \mid \, = 0.5 \ \%$$

$$\mid \delta \, \Delta h_{HPad}/\Delta h_{HPad} \mid \, = 0.4 \ \%$$

$$\mid \delta \, G_{HP}/G_{HP} \mid \, = 0.7 \ \%$$

$$\mid \delta \, \eta_{HP}/\eta_{HP} \mid \, = (0.5^2 + 0.4^2 + 0.7^2)^{1/2} = 0.9 \ \% \dots \ (7)$$

Further, the HP-turbine-internal-efficiency-calculating-means 17 sends the calculated internal efficiency $\eta_{HP}$ of the HP turbine 44 to the plant-state-optimizing-means 24.

Next, the steam-condition-on-LP-turbine-inlet-calculating-means 18 calculates the flow rate of the steam at each inlet of the first LP turbine 45a, the second LP turbine 45b, and the third LP turbine 45c. In general, the steam passed through the HP turbine 44 is in a wet state, so the steam is lead to the hygroscopic moisture separator 50 and the moisture of the steam are removed by the hygroscopic moisture separator 50. Hence, the dryness of the steam lead to the first LP turbine 45a, the second LP turbine 45b, and the third LP turbine 45c is influenced.

In the nuclear power plant 26 of Fig. 2, the extraction port is provided to the steam pipe 48 between the HP turbine 44 and the hygroscopic moisture separator 50, and the extracted steam is lead to the second heater 51b and drain generated in the hygroscopic moisture separator 50 and drain at the outlet of the first heater 51a are also lead to the second heater 51b and used for heat exchange with feedwater.

Then, in step S10, the steam-condition-on-LP-turbine-inlet-calculating-means 18 calculates hygroscopic moisture separation efficiency of the hygroscopic moisture separator 50, that is, a rate of moisture that can be separated from the moisture content of the steam, for calculating the quantity of drain that is separated in the hygroscopic moisture separator 50.

The hygroscopic moisture separation efficiency of the hygroscopic moisture separator 50 can be calculated based on design information of the hygroscopic moisture separator 50 in accordance with the flow rate of the steam at the inlet of the hygroscopic moisture separator 50. That is, the hygroscopic moisture separation efficiency is expressed as the function regarding as the flow rate of the steam at the inlet of the hygroscopic moisture separator 50 or related with the flow rate of the steam at the inlet of the hygroscopic moisture separator 50 in a table.

Further, the flow rate of the steam at the outlet 72 of the HP turbine 44 is the sum of the flow rate of the steam at the inlet of the hygroscopic moisture separator 50 and the flow rate of the extracted steam lead to the second heater 51b. Hence, the flow rate of the steam at the inlet of the hygroscopic moisture separator 50 can be expressed by using the flow rate of the extracted steam lead to the second heater 51b indicated as a parameter and vice versa.

Then, the steam-condition-on-LP-turbine-inlet-calculating-means 18 calculates the hygroscopic moisture separation efficiency of the hygroscopic moisture separator 50 using the flow rate of the steam at the inlet of the hygroscopic moisture separator 50 indicated as a parameter based on the function or table as design information of the hygroscopic moisture separator 50.

Next, in step S11, the steam-condition-on-LP-turbine-inlet-calculating-means 18 calculates the quantity of drain separated from the steam in the hygroscopic moisture separator 50 using the flow rate of the steam at the inlet of the hygroscopic moisture separator 50 as a parameter by multiplying the hygroscopic moisture separation efficiency of the hygroscopic moisture separator 50 calculated in step S10 by the flow rate of the steam at the inlet of the hygroscopic moisture separator 50.

Further, the steam-condition-on-LP-turbine-inlet-calculating-means 18 calculates the dryness of the steam at the outlet of the hygroscopic moisture separator 50 based on the quantity of drain separated from the steam in the hygroscopic moisture separator 50, and the flow rate of steam at the inlet of the hygroscopic moisture separator 50 using the flow rate of the steam at the inlet of the hygroscopic moisture separator 50 as a parameter.

The steam-condition-on-LP-turbine-inlet-calculating-means 18 executes a heat balance calculation regarding as the heat quantity of the drain separated from the steam in the hygroscopic moisture separator 50, and the heat quantity of the steam at the inlet of the hygroscopic moisture separator 50 to calculate the flow rate of the steam at the outlet of the hygroscopic moisture separator 50 using the flow rate of the steam at the inlet of the hygroscopic moisture separator 50 as a parameter.

At this time, the temperatures or pressures of the drain and the steam necessary for calculating the flow rate of the steam at the outlet of the hygroscopic moisture separator 50 is measured by the plant data measuring system 30 and the measured value is input to the steam-condition-on-LP-turbine-inlet-calculating-means 18.

Next, in step S12, the steam-condition-on-LP-turbine-inlet-calculating-means 18 calculates the flow rate of the extracted steam lead to the second heater 51b. The flow rate of the extracted steam lead to the second heater 51b can be calculated through the heat balance calculation using the heat quantity received by the feedwater in the second heater 51b, the heat quantity of the drain, and the heat quantity of the extracted steam, similar to the calculation of the flow rate of the extracted steam lead to the first heater 51a.

Thus, the flow rate of the extracted steam lead to the second heater 51b, the flow rate of the steam at the inlet of the hygroscopic moisture separator 50, the dryness of the steam at the outlet of the hygroscopic moisture separator 50, and the flow rate of the steam at the outlet of the hygroscopic moisture separator 50 can be calculated using the flow rate of the drain at the hygroscopic moisture separator 50 which is calculated using the flow rate of the steam at the inlet of the hygroscopic moisture separator 50 as a parameter in steps S10 to S12.

At this time, the steam-condition-on-LP-turbine-inlet-calculating-means 18 receives data such as the temperatures or pressures of the extracted steam, feedwater, and drain necessary for calculating the flow rate of the steam at the inlet of the hygroscopic moisture separator 50 from the plant data measuring system 30, and receives the enthalpies or specific enthalpies of the feedwater or drain from the heat-exchange-on-heater-calculating-means 14. Further, as the specific enthalpy of the extracted steam at the inlet of the second heater 51b, the specific enthalpy of the steam at the outlet 72 of the HP turbine 44 may be used.

Further, in the nuclear power plant 26 of Fig. 2, the extraction port is provided to the steam pipe 48 between the hygroscopic moisture separator 50 and the first LP turbine 45a, the second LP turbine 45b, and the third LP turbine 45c, and the extracted steam is lead to the RFP turbine 54 and used as a power source.

Thus, the steam-condition-on-LP-turbine-inlet-calculating-means 18 calculates the flow rate of the steam at each inlet of the first LP turbine 45a, the second LP turbine 45b, and the third LP turbine 45c using the flow rate $G_{RFPT}$ of the extracted steam lead to the RFP turbine 54 as a parameter. There, the flow rate $G_{RFPT}$ of the extracted steam lead to the RFP turbine 54 can be calculated through energy balance calculation at the RFP turbine 54 similar to the flow rate of the extracted steam lead to the second heater 51b and thus can be finally calculated by solving the energy balance calculation expression on the RFP turbine 54.

Then, the steam-condition-on-LP-turbine-inlet-calculating-means 18 sends the dryness, temperature, pressure, and flow rate of the steam at each inlet of the first LP turbine 45a, the second LP turbine 45b, and the third LP turbine 45c to the LP-turbine-power-calculating-means 21.

Next, in step S13, the data-calculating-means 19 calculates the internal efficiency $\eta_{RFPT}$ of the RFP turbine 54 for a subsequent process of determining whether or not a plant state is optimized. Here, the power $W_{RFPT}$ of the RFP turbine 54 is calculated by Expression (8).

$$W_{RFPT} = \eta_{RFPT} \cdot G_{RFPT} \cdot \Delta h_{RFPT} \dots (8)$$

Where

$W_{RFPT}$: Power of RFP turbine
$\eta_{RFPT}$: internal efficiency of RFP turbine
$G_{RFPT}$: flow rate of the extracted steam at the inlet of the RFP turbine
$\Delta h_{RFPT}$: adiabatic heat drop of RFP turbine

That is, similar expression to Expression (3) of the power $W_{HP}$ pf the HP turbine 44 is used. Here, the power $W_{RFPT}$ of the RFP turbine 54 is considered to be equal to a power of the reactor feedwater pump 52, that is, the pressurization energy which the feedwater acquires in the reactor feedwater pump 52. Hence, the pressurization energy which the feedwater acquires in the reactor feedwater pump 52 is measured by the plant data measuring system 30 to calculate the power $W_{RFPT}$ of the RFP turbine 54. In addition, the internal efficiency $\eta_{RFPT}$ of the RFP turbine 54 can be calculated using the flow rate of the extracted steam lead to the RFP turbine 54 based on Expression (8).

Here, as the flow rate $G_{RFPT}$ of the extracted steam at the inlet of the RFP turbine 54, a measured value or a value based on a design value of the RFP turbine 54 may be used. Further, the adiabatic heat drop $\Delta h_{RFPT}$ of the RFP turbine 54 can be calculated based on the temperature, pressure, and dryness of the extracted steam at the inlet of the RFP turbine 54 and the pressure of the extracted steam at the outlet using the steam table.

The specific enthalpy of the extracted steam at the inlet of the RFP turbine 54 is equal to the specific enthalpy at the outlet of the hygroscopic moisture separator 50 calculated in step S11, and the temperature and pressure of the extracted steam at the inlet of the RFP turbine 54 and the pressure of the extracted steam at the outlet of the RFP turbine 54 can be calculated based on the value measured by the plant data measuring system 30.

Incidentally, the power $W_{RFPT}$ of the RFP turbine 54 may be a measured value or a value based on a design value of the RFP turbine 54.

The data-calculating-means 19 sends the calculated internal efficiency $\eta$RFPT of the RFP turbine 54 to the plant-state-optimizing-means 24.

In step S14, the data-calculating-means 19 calculates the heat quantity received by the steam in the reactor 40. The heat quantity received by the steam in the reactor 40 may be calculated as a difference between the enthalpy of the feedwater and the enthalpy of the steam based on the temperature and pressure of feedwater at the inlet of the reactor 40 and the temperature, pressure, and dryness of the steam at the outlet of the reactor 40 based on the steam table.

Hence, the plant data measuring system 30 measures the temperature and pressure of the feedwater at the inlet of the reactor 40 and the temperature, pressure, and dryness of the steam at the outlet of the reactor 40, and the data-calculating-means 19 receives from the plant data measuring system 30 the temperature and pressure of feedwater at the inlet of the reactor 40 and the temperature, pressure, and dryness of the steam at the outlet of the reactor 40.

The data-calculating-means 19 sends the obtained heat quantity received by the steam to the plant-state-optimizing-means 24. The data-calculating-means 19 requests the LP-turbine-selecting-means 20 to select the LP turbine 45 of which the internal efficiency $\eta_{LP}$ is to be calculated.

Next, in step S15, the LP-turbine-selecting-means 20 determines the LP turbine 45 of which the internal efficiency $\eta$LP is to be calculated in response to the request from the data-calculating-means 19, and requests the LP-turbine-power-calculating-means 21 to calculate a power of the selected LP turbine 45. Here, the calculation is executed on the assumption that the internal efficiencies $\eta$LP of the first LP turbine 45a, the second LP turbine 45b, and the third LP turbine 45c are equal. Thus, the LP-turbine-selecting-means 20 selects all of the first LP turbine 45a, the second LP turbine 45b, and the third LP turbine 45c.

Next, in step S16, the LP-turbine-power-calculating-means 21 sets assumptive reference expansion line of the first LP turbine 45a, the second LP turbine 45b, and the third LP turbine 45c in the h-s diagram in response to the request to calculate each power of the first LP turbine 45a, the second LP turbine 45b, and the third LP turbine 45c from the LP-turbine-selecting-means 20.

The LP-turbine-power-calculating-means 21 first calculates the specific enthalpy of the steam at the inlet of the first LP turbine 45a, the second LP turbine 45b, and the third LP turbine 45c based on the temperature, pressure, and dryness, which are supplied from the steam-condition-on-LP-turbine-inlet-calculating-means 18, of the steam at each inlet of the first LP turbine 45a, the second LP turbine 45b, and the third LP turbine 45c to plot points on the constant-pressure lines and the steam pressure at each inlet of the first LP turbine 45a, the second LP turbine 45b, and the third LP turbine 45c to the h-s diagram. Then, the LP-turbine-power-calculating-means 21 sets a reference expansion line A1 using an arbitrary method based on the designed reference expansion line passing through the plotted points and provided as design information. For example, it is possible to set a curve similar to the designed reference expansion line or an approximate reference expansion line serving as a high-order curve.

For executing the calculation in steps S17 to S23 described below, the pressure at each point of the first extraction port 83 to the fourth extraction port 86, and the first drain catcher 87a, the third drain catcher 87c, and the fifth drain catcher 87e of the first LP turbine 45a, the second LP turbine 45b, and the third LP turbine 45c, and the pressure and temperature at each outlet 82 of the first LP turbine 45a, the second LP turbine 45b, and the third LP turbine 45c are measured by the plant data measuring system 30 and input to the LP-turbine-power-calculating-means 21.

That is, the pressures and temperatures at the inlet and outlet of each of plural stage groups obtained by dividing each of the first LP turbine 45a, the second LP turbine 45b, and the third LP turbine 45c at the points of the first extraction port 83 to the fourth extraction port 86, and the first drain catcher 87a, the third drain catcher 87c, and the fifth drain catcher 87e are measured.

Incidentally, the second drain catcher 87b and the fourth drain catcher 87d are placed near the third extraction port 85 and the fourth extraction port 86 respectively unlike the first drain catcher 87a, the third drain catcher 87c, and the fifth drain catcher 87e. Hence, as for the second drain catcher 87b and the fourth drain catcher 87d, the incidental steam on removing the drain may not be taken into account. Therefore, the heat balance calculations on the second drain catcher 87b and the fourth drain catcher 87d are executed together with those on the third extraction port 85 and the fourth extraction port 86 respectively.

Here, a method of calculating each power of the first LP turbine 45a, the second LP turbine 45b, and the third LP turbine 45c using the drain quantity caught by the drain catcher 87 will be described.

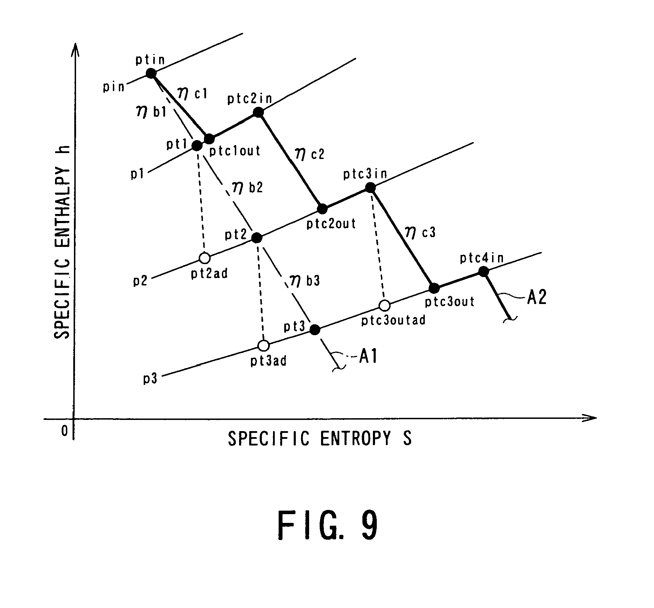

Fig. 9 shows an example of a reference expansion line and a corrected expansion line of the LP turbines 45a, 45b and 45c in the h-s diagram assumed in the flowchart of Fig. 8.

In Fig. 9, the ordinate represents a specific enthalpy, and the abscissa represents a specific entropy. In Fig. 9, the dashed line represents each reference expansion line A1 of the first LP turbine 45a, the second LP turbine 45b, and the third LP turbine 45c, and the solid line represents each corrected expansion line A2 of the first LP turbine 45a, the second LP turbine 45b, and the third LP turbine 45c.

Further, the pressures of the steam at each inlet and outlet of the first LP turbine 45a, the second LP turbine 45b, and the third LP turbine 45c are denoted by $p_{in}$ and pout respectively, and the pressures at the points of the first drain catcher 87a to the fifth drain catcher 87e are denoted by $p_1$, $p_2$, ..., $p_5$, respectively. The point on the constant-pressure line indicating the pressure at each inlet of the first LP turbine 45a, the second LP turbine 45b, and the third LP turbine 45c is denoted by $pt_{in}$.

The LP-turbine-power-calculating-means 21 calculates the intersections $pt_1$, $pt_2$, ..., $pt_5$, $pt_{out}$ between the reference expansion line A1 and each constant-pressure line of the pressures $p_1$, $p_2$, ..., $p_5$, $p_{out}$ received from the plant data measuring system 30, by which each specific enthalpy of the steam at each point of the first drain catcher 87a to the fifth drain catcher 45c and each outlet 82 of the first LP turbine 45a, the second LP turbine 45b, and the third LP turbine 45c can be assumed.

Incidentally, the adiabatic heat drop of the steam between each inlet and outlet 82 of the first LP turbine 45a, the second LP turbine 45b, and the third LP turbine 45c are calculated based on the specific enthalpy at each inlet of the first LP turbine 45a, the second LP turbine 45b, and the third LP turbine 45c and the pressure $p_{out}$ at each outlet 82 of the first LP turbine 45a, the second LP turbine 45b, and the third LP turbine 45c received from the plant data measuring system 30 to determine the point $pt_{out}$ corresponding to the outlet 82 of each of the first LP turbine 45a, the second LP turbine 45b, and the third LP turbine 45c by multiplying each design internal efficiency of the first LP turbine 45a, the second LP turbine 45b, and the third LP turbine 45c by the adiabatic heat drop. The line connecting between the point $pt_{in}$ corresponding to each inlet of the first LP turbine 45a, the second LP turbine 45b, and the third LP turbine 45c and the point $pt_{out}$ corresponding to each outlet 82 may be assumed as the reference expansion line A1 by the LP-turbine-power-calculating-means 21.

Next, the LP-turbine-power-calculating-means 21 divides each inside of the first LP turbine 45a, the second LP turbine 45b, and the third LP turbine 45c based on the reference expansion line A1 of the first LP turbine 45a, the second LP turbine 45b, and the third LP turbine 45c of Fig. 9 into stage groups among the points $pt_{in}$, $pt_1$, $pt_2$, ..., $pt_5$, $pt_{out}$. The stage group reference turbine efficiencies $\eta_{b1}$, $\eta_{b2}$, ..., $\eta_{b6}$ as the respective turbine efficiencies in stage groups are calculated from Expression (9) as the general expression of the turbine efficiency by the LP-turbine-power-calculating-means 21.

$$\eta_{bn} = \Delta h_{bn}/\Delta h_{bnad} \ ... \ (9)$$

where

$\eta_{bn}$: stage group reference turbine efficiency
$\Delta h_{bn}$: effective heat drop of steam between points
$\Delta h_{bnad}$: adiabatic heat drop of steam between points

Here, in the first drain catcher 87a to the fifth drain catcher 87e of each of the first LP turbine 45a, the second LP turbine 45b, and the third LP turbine 45c, the drain is separated from the steam, and so the dryness of the steam at downstream of each of the first drain catcher 87a to the fifth drain catcher 87e increases from that at upstream thereof. Hence, in practice, the steam expansion line is a curve having steps as indicated by the corrected expansion line A2 of Fig. 9.

First, the dryness is increased in each of the first drain catcher 87a to the fifth drain catcher 87e, so the stage-group-corrected-turbine-efficiencies $\eta_{c1}$, $\eta_{c2}$, ..., $\eta_{c6}$ as the turbine efficiencies in stage groups c1, c2, ..., c6 between the points $pt_{in}$, $pt_1$, $pt_2$, ..., $pt_5$, $pt_{out}$ based on the corrected expansion line A2 of the steam are improved as compared with the stage-group-reference-turbine-efficiencies $\eta_{b1}$, $\eta_{b2}$, ..., $\eta_{b6}$ in respective stage groups.

Accurately, the turbine efficiency $\eta_{b1}$ is equal to the turbine efficiency $\eta_{c1}$, so $pt_1$ corresponds to $pt_{clout}$ in Fig. 9.

Here, a regular relation based on the design information of the LP turbine 45 is established between the stage-group-corrected-turbine-efficiencies $\eta_{c1}$, $\eta_{c2}$, ..., $\eta_{c6}$ and the stage-group-reference-turbine-efficiencies $\eta_{b1}$, $\eta_{b2}$, ..., $\eta_{b6}$ in the respective stage groups c1, c2, ..., c6 based on the corrected expansion line A2 of the steam. For example, a relation of Expression (10) is stabilized between the stage group corrected turbine efficiency $\eta_{c3}$ and the stage group reference turbine efficiency $\eta_{b3}$.

$$\eta_{c3} = \eta_{b3}\{1 \cdot C1 \cdot (m_{c3in} + m_{c3out})/2\}/\{1 \cdot C2 \cdot (m_{pt2} + m_{pt3})/2\} \ ... \ (10)$$

where

$m_{c3in}$: wetness at inlet of the stage group c3
$m_{c3out}$: wetness at outlet of the stage group c3
$m_{pt2}$: wetness at point $pt_2$
$m_{pt3}$: wetness at point $pt_3$
C1, C2: constants based on design information of the LP turbine.

In the LP turbine 45 of Fig. 5, C1 = C2 = about 0.87.

In this case, $m_{pt2}$ and $m_{pt3}$ can be calculated based on the assumed reference expansion line A1. Further, provided that values of the dryness at the points $pt_{c3out}$ and $pt_{c3in}$ are represented by $x_{c3out}$ and $x_{c3in}$ respectively, the sum of $x_{c3out}$ and $m_{c3out}$ and the sum of $x_{c3in}$ and $m_{c3in}$ are equal to 1 respectively. Hence, if the dryness $x_{c3in}$ at the inlet of the stage group c3 has been known, the stage group corrected turbine efficiency $\eta_{c3}$ is represented by the function using $m_{c3out}$ as a parameter.

Thus, the dryness $x_{c3out}$ at the outlet of the stage group c3 and the stage group corrected turbine efficiency

$\eta_{c3}$ can be calculated by repeating the calculation of Expressions (11-1), (11-2), and (11-3) using $m_{c3out}$ as a parameter.

$$h_{c3out} = f_h(p_3, m_{c3out}) \ \dots \ (11\text{-}1)$$

$$\eta_{c3} = f_\eta(m_{c3out}) \ \dots \ (11\text{-}2)$$

$$h_{c3outcal} = h_{c3in} - \eta_{c3}\,(h_{c3in} - h_{c3outad}) \ \dots \ (11\text{-}3)$$

where

$h_{c3out}$: specific enthalpy of steam at outlet of stage group c3
$f_h$: function for calculating specific enthalpy of steam based on pressure and wetness
$f_\eta$: function for calculating stage group corrected turbine efficiency based on wetness
$h_{c3in}$: specific enthalpy of steam at inlet of stage group c3
$h_{c3outcal}$: calculated value of specific enthalpy of steam at outlet of stage group c3 based on turbine efficiency calculation expression
$h_{c3outad}$: specific enthalpy of steam at outlet of stage group c3 on the assumption that the steam is subjected to isentropic change.

That is, $m_{c3out}$ is changed to repeat calculation until the right term of Expression (11-1) equals the right term of Expression (11-3) to thereby calculate the dryness $x_{c3out}$ and the stage group corrected turbine efficiency $\eta_{c3}$. If the specific enthalpy $h_{c3in}$ at the inlet of the stage group 3 is known, $h_{c3outad}$ can be derived from the h-s diagram.

Similar expressions are established between the stage group corrected turbine efficiencies $\eta_{c1}$, $\eta_{c2}$, ..., $\eta_{c6}$ and the stage group reference turbine efficiencies $\eta_{b1}$, $\eta_{b2}$, ..., $\eta_{b6}$ respectively. Hence, if the dryness and pressure or specific enthalpy at the inlet of each stage group is known, the dryness at the outlet can be calculated to obtain the specific enthalpy at the outlet.

Therefore, in order to obtain the corrected expansion line A2, the values of the dryness at the inlet of each of the stage groups c1, c2, ..., c6, that is, each variation of the dryness at the first drain catcher 87a to the fifth drain catcher 87e should be calculated.

Next, in step S17, the LP-turbine-power-calculating-means 21 calculates the flow rate of each extracted steam lead to the gland steam vaporizer 56 and the third heater 51c from the first LP turbine 45a to the third LP turbine 45c through the heat balance calculation. That is, similar to the extracted steam of the HP turbine 44, the heat quantity of each extracted steam lead from the first LP turbine 45a, the second LP turbine 45b, and the third LP turbine 45c to the third heater 51c and the gland steam vaporizer 56 can be calculated based on the heat quantities that the condensate water receives in the third heater 51c and the gland steam vaporizer 56, and the heat quantities of the drain and steam generated in the third heater 51c and the gland steam vaporizer 56.

Next, in step S18, the LP-turbine-power-calculating-means 21 calculates the flow rate of each extracted steam lead from the first LP turbine 45a, the second LP turbine 45b, and the third LP turbine 45c to the fourth heater 51d similar to step S17 through the heat balance calculation.

Next, in step S19, the LP-turbine-power-calculating-means 21 calculates the quantity of drain separated from the steam in the first drain catcher 87a. Here, the hygroscopic moisture separation efficiencies in the first drain catcher 87a to the fifth drain catcher 87e are organized into databases or functions serving as design information beforehand respectively.

For example, the hygroscopic moisture separation efficiency $\varepsilon$ of the first drain catcher 87a is expressed as the function using the pressure of the stream on the downstream side of the first drain catcher 87a, i.e. $p_1$ of Fig. 9 as indicated by Expression (12).

$$\varepsilon = f_\varepsilon(p_1) \ \dots \ (12)$$

Further, the flow rates of the drain and the steam separated by the first drain catcher 87a are expressed by Expression (13) using a constant C3 obtained from the design information of the first drain catcher 87a.

$$G_{D.drain} = (C3/100) \cdot G_{clout} \cdot (1 - x_{clout}) + G_{clout}(1 - x_{clout}) \, \varepsilon$$

$$G_{D.steam} = (C3/100) \cdot G_{clout} \cdot x_{clout}$$

$$G_D = G_{D.drain} + G_{D.steam} \dots (13)$$

Where

$G_{D.drain}$: flow rate of drain separated by the first drain catcher
$G_{D.steam}$: flow rate of steam separated by the first drain catcher
$G_D$: total flow rate of drain and extracted steam separated by the first drain catcher
$G_{clout}$: flow rate of steam at outlet of stage group c1
C3: constant derived from design information of the first drain catcher

Further, the flow rate $G_{MRD}$ of the incidental steam generated in the first drain catcher 87a is expressed by Expression (14).

$$G_{MRD} = (C3/100) \cdot G_{clout} \dots (14)$$

Further, a specific enthalpy of the drain and the steam separated in the first drain catcher 87a is expressed by Expression (15).

$$h_D = (h'_{clout} \cdot G_{D.drain} + h''_{clout} \cdot G_{D.steam})/ \, G_D$$

$$h'_{clout} = f_{h'} (p_1)$$

$$h''_{clout} = g_{h''}(p_1) \dots (15)$$

where

$h_D$: specific enthalpy of drain and steam separated in the first drain catcher
$h'_{clout}$: specific enthalpy of saturated water at outlet of stage group c1
$h''_{clout}$: specific enthalpy of saturated steam at outlet of stage group c1

Further, the flow rate of the steam from which the drain is removed by the first drain catcher 87a, that is, the steam at the inlet of the stage group c2 is expressed by Expression (16).

$$G_{c2in.drain} = G_{clout} \cdot (1 - x_{clout}) - G_{D.drain}$$

$$G_{c2in.steam} = G_{clout} \cdot x_{clout} - G_{D.steam}$$

$$G_{c2in} = G_{c2in.drain} + G_{c2in.steam} \dots (16)$$

where

$G_{c2in.drain}$: flow rate of drain component in steam at the inlet of the stage group c2
$G_{c2in.steam}$: flow rate of steam component in steam at the inlet of the stage group c2

$G_{c2in}$: total flow rate of steam at the inlet of the stage group c2

Further, the dryness $x_{c2in}$ of the steam at the inlet of the stage group c2 is expressed by Expression (17).

$$\mathbf{x_{c2in} = G_{c2in.steam}/G_{c2in} \ ... \ (17)}$$

Further, the specific enthalpy $h_{c2in}$ and specific entropy $s_{c2in}$ of the steam at the inlet of the stage group c2 are expressed as the function of the point $pt_1$, that is, the pressure $p_1$ of the steam at the inlet of the stage group c2 and the dryness $x_{c2in}$ of the steam at the inlet of the stage group c2, as indicated by Expression (18).

$$\mathbf{h_{c2in} = f_{hC2in}(p_1, \ x_{c2in})}$$

$$\mathbf{s_{c2in} = g_{sC2in}(p_1, \ x_{c2in}) \ ... \ (18)}$$

Hence, the LP-turbine-power-calculating-means 21 can calculate the flow rates $G_{D.drain}$, $G_{D.steam}$, and $G_D$ of the drain and steam separated by the first drain catcher 87a, the total specific enthalpy $h_D$ of the drain and steam, the flow rate $G_{MRD}$ of the incidental steam generated in the first drain catcher 87a, the flow rate $G_{C2in}$, the dryness $x_{C2in}$, the specific enthalpy $h_{C2in}$, and the specific entropy $s_{C2in}$ of the steam at the inlet of the stage group c2, can be calculated using the pressure p1 on the downstream side from the first drain catcher 87a based on Expressions (12), (13), (14), (15), (16), (17), and (18).

Next, in step S20, the LP-turbine-power-calculating-means 21 calculates the stage group corrected turbine efficiency $\eta_{c2}$ of the stage group c2 through the repeated calculation of Expressions (11-1), (11-2), and (11-3) using the dryness $x_{C2in}$ of the steam at the inlet of the stage group c2, and calculates the specific enthalpy $h_{C2out}$ of the steam at the outlet of the stage group c2. Further, similar to steps S18 and S19, the LP-turbine-power-calculating-means 21 calculates the quantity of the drain in the second drain catcher 87b, and the flow rate of the extracted steam lead from each of the first LP turbine 45a, the second LP turbine 45b, and the third LP turbine 45c to the fifth heater 51e through the heat balance calculation. Hence, the total flow rate $G_{C3in}$, the dryness $x_{C3in}$, and the specific enthalpy $h_{C3in}$ of the steam at the inlet of the stage group c3 can be calculated.

Next, in step S21, similar to step S19, the LP-turbine-power-calculating-means 21 calculates the flow rates of the drain and steam separated by the third drain catcher 87c, the total specific enthalpy of the drain and steam, the flow rate of the incidental steam generated in the third drain catcher 87c, and the flow rate, the dryness, the specific enthalpy, and the specific entropy of the steam at the inlet of the subsequent stage group based on the pressure on the downstream side of the third drain catcher 87c in accordance with Expressions (12), (13), (14), (15), (16), (17), and (18).

Next, in step S22, similar to step S20, the LP-turbine-power-calculating-means 21 calculates the quantity of drain separated by the fourth drain catcher 87d and the flow rate of the extracted steam lead to the sixth heater 51f from each of the first LP turbine 45a, the second LP turbine 45b, and the third LP turbine 45c through the heat balance calculation. Here, the drain generated in each of the sixth heater 51f and the fifth heater 51e is lead to the common drain tank 60. When the drain from the sixth heater 51f and drain from the fifth heater 51e are mixed in the drain tank 60, the steam is generated. The steam generated in the drain tank 60 is lead to the sixth heater 51f and the rest drain component is lead to the drain condenser 53.

Then, the data-calculating-means 19 executes the heat balance calculation on the drain tank 60. The heat quantity of the drain lead from each of the sixth heater 51f and the fifth heater 51e to the drain tank 60 is calculated based on the specific enthalpy of the drain calculated in step S2 by the heat-exchange-on-heater-calculating-means 14.

Further, the flow rate of the drain flowing from the sixth heater 51f to the drain tank 60 is sufficiently lower than the flow rate of the drain flowing from the fifth heater 51e to the drain tank 60, and the internal pressure of the drain tank 60 may be made approximate to the pressure of the sixth heater 51f.

Then, the dryness of the steam in the drain tank 60 can be calculated based on the steam table in accordance with the heat quantity and pressure of the steam flowing into the drain tank 60. Further, the heat quantity of the steam lead to the sixth heater 51f and the heat quantity of the drain lead into the drain condenser 53 can be calculated based on the dryness of the steam in the drain tank 60.

Next, in step S23, as in step S19, the LP-turbine-power-calculating-means 21 can calculate the flow rates of the drain and steam separated by the fifth drain catcher 87e, the total specific enthalpy of the drain and the steam, the flow rate of the incidental steam generated in the fifth drain catcher 87e, and the flow rate, the dryness, the specific enthalpy, and the specific entropy of the steam at each outlet 82 of the first LP turbine 45a, the second LP turbine 45b, and the third LP turbine 45c using the pressure on the downstream side of the fifth drain catcher 87e based on Expressions (12), (13), (14), (15), (16), (17), and (18).

As a result, the corrected expansion line A2 from the inlet to the outlet 82 of each of the first LP turbine 45a, the second LP turbine 45b, and the third LP turbine 45c can be obtained by the LP-turbine-power-calculating-means 21. that is, the LP-turbine-power-calculating-means 21 calculates the specific enthalpies, degrees of dryness, and flow rates of the steam at the inlet and outlet of each stage group by repeating the acquisition of the specific enthalpy and dryness of the steam at the inlet of stage groups from each inlet of the first LP turbine 45a, the second LP turbine 45b, and the third LP turbine 45c, the calculation of the stage group corrected turbine efficiency based on the stage group reference turbine efficiency, the calculation of the specific enthalpy and dryness of the steam at the outlet of the stage group, the calculation of the flow rate and the specific enthalpy of the extracted steam or drain, and the calculation of the specific enthalpy and the dryness of the steam at the inlet of the next stage group.

Incidentally, as a result of calculating the stage group corrected turbine efficiency $\eta_{c2}$ on the downstream side of the first drain catcher 87a, that is, at the stage group c2, the stage group corrected turbine efficiency $\eta_{c2}$ of the stage group c2 shows 0.3% increase over the stage group reference turbine efficiency $\eta_{b2}$ of the stage group c2. Likewise, the stage group corrected turbine efficiencies $\eta_{c3}$, $\eta_{c4}$, $\eta_{c5}$, and $\eta_{c6}$ of the stage groups c3, c4, c5, and c6 show 0.8%, 1.7%, 4..0%, and 6.3% increases over the stage group reference turbine efficiencies $\eta_{b3}$, $\eta_{b4}$, $\eta_{b5}$, and $\eta_{b6}$ of the stage groups c3, c4, c5, and c6 respectively.

Hence, as in the nuclear power plant 26, when there are the drain catchers 87 or the extraction ports 83, 84, 85, and 86 in the first LP turbine 45a, the second LP turbine 45b, and the third LP turbine 45c, unlike the thermal power plant, it is necessary to correct each internal efficiency $\eta_{LP}$ of the first LP turbine 45a, the second LP turbine 45b, and the third LP turbine 45c in consideration of the drain catchers 87 in order to improve the accuracy.

Next, in step S24, the LP-turbine-power-calculating-means 21 calculates each exhaust loss of the steam in the first LP turbine 45a, the second LP turbine 45b, and the third LP turbine 45c, that is, each velocity energy of the steam not used for the rotation of the turbine blade in the first LP turbine 45a, the second LP turbine 45b, and the third LP turbine 45c, similarly to the case of the HP turbine 44.

The exhaust loss of the steam can be calculated based on the flow rate of the steam at each outlet 82 of the first LP turbine 45a, the second LP turbine 45b, and the third LP turbine 45c, and the sectional area at each outlet 82 of the first LP turbine 45a, the second LP turbine 45b, and the third LP turbine 45c similarly to the exhaust loss of the steam at the outlet 72 of the HP turbine 44.

Next, in step S25, the LP-turbine-power-calculating-means 21 calculates each power of the first LP turbine 45a, the second LP turbine 45b, and the third LP turbine 45c. That is, the LP-turbine-power-calculating-means 21 calculates the stage group power serving as the power of each stage group of the first LP turbine 45a, the second LP turbine 45b, and the third LP turbine 45c. Each stage group power of the first LP turbine 45a, the second LP turbine 45b, and the third LP turbine 45c is calculated as the product of the effective heat drop between the outlet and inlet of each stage group by the flow rate of the steam at the inlet of each stage group. For example, the stage group power $W_{c3}$ of the stage group c3 may be derived from Expression (19).

$$W_{c3} = G_{c3in} \cdot (h_{c3in} - h_{c3out}) \ldots (19)$$

The LP-turbine-power-calculating-means 21 calculates the stage group power in each stage group based on Expression (19) and adds the calculation results to thereby acquire the total calculated power value $W_{LPcal}$ of the first LP turbine 45a, the second LP turbine 45b, and the third LP turbine 45c. Then, the LP-turbine-power-calculating-means 21 sends the calculated power value $W_{LPcal}$ of the first LP turbine 45a, the second LP turbine 45b, and the third LP turbine 45c to the LP-turbine-power-correcting-means 22.

On the other hand, the stage group efficiency as efficiency of each stage group of the first LP turbine 45a, the second LP turbine 45b, and the third LP turbine 45c can be expressed as a ratio between an effective heat drop and adiabatic heat drop between an output and an inlet of each stage group. For example, the stage group efficiency $\eta_{c3}$ of the stage group c3 can be calculated based on Expression (20) using the effective heat drop $UE_{c3}$ and the adiabatic heat drop $AE_{c3}$ of the stage group c3.

$$\eta_{c3} = UE_{c3}/ AE_{c3} = (h_{c3in} - h_{c3out})/(h_{c3in} - h_{c3outad}) \ldots (20)$$

The LP-turbine-power-calculating-means 21 calculates each stage group efficiency of the first LP turbine 45a, the second LP turbine 45b, and the third LP turbine 45c based on Expression (20) to supply the calculation result to the LP-turbine-internal-efficiency-calculating-means 23.

Next, in step S26, the LP-turbine-power-correcting-means 22 receives the total power $W_{TOTAL}$ of the nuclear power plant 26 measured by the generator power sensor 29, receives the measured shaft torque value F of the HP turbine 44 from the shaft torque sensor 27, and subtracts a value, which is assumed as the power $W_{HP}$ of the HP turbine 44, obtained by multiplying the measured shaft torque value F of the HP turbine 44 by the power generation efficiency η from the total power $W_{TOTAL}$ of the nuclear power plant 26 to thereby indirectly acquire the measured power value $W_{LPact}$ of the first LP turbine 45a, the second LP turbine 45b, and the third LP turbine 45c.

That is, provided that the total power of the nuclear power plant 26 is represented by $W_{TOTAL}$, the power of the HP turbine 44 is represented by $W_{HP}$, and the power of the first LP turbine 45a, the second LP turbine 45b, and the third LP turbine 45c is represented by $W_{LP}$, Expression (21) is established.

$$W_{LP} = W_{TOTAL} - W_{HP} \ldots (21)$$

Accordingly, if the power $W_{HP}$ of the HP turbine 44 is equal to a value obtained by multiplying the measured shaft torque value F of the HP turbine 44 by the power generation efficiency η, Expression (22) is established.

$$W_{LPact} = W_{TOTAL} - F \times \eta \ldots (22)$$

Hence, if the measured shaft torque value F of the HP turbine 44 is measured, the measured power value $W_{LPact}$ of the first LP turbine 45a, the second LP turbine 45b, and the third LP turbine 45c can be indirectly acquired. The LP-turbine-power-correcting-means 22 indirectly acquires the measured power value $W_{LPact}$ of the first LP turbine 45a, the second LP turbine 45b, and the third LP turbine 45c based on the measured shaft torque value F of the HP turbine 44 and the total power $W_{TOTAL}$ of the nuclear power plant 26 using Expression (22).

Further, the LP-turbine-power-correcting-means 22 determines whether or not a ratio between the measured power value $W_{LPact}$ of the first LP turbine 45a, the second LP turbine 45b, and the third LP turbine 45c and the calculated power value $W_{LPcal}$ of the first LP turbine 45a, the second LP turbine 45b, and the third LP turbine 45c is within the threshold value $\varepsilon_{LP}$.

$$| W_{LPcal}/W_{LPact} - 1 | < \varepsilon_{LP} \ldots (23)$$

Further, if it is determined that the ratio between the measured power value $W_{LPact}$ of the first LP turbine 45a, the second LP turbine 45b, and the third LP turbine 45c and the calculated power value $W_{LPcal}$ of the first LP turbine 45a, the second LP turbine 45b, and the third LP turbine 45c is not within the threshold value $\varepsilon_{LP}$, the LP-turbine-power-correcting-means 22 sends a request to correct the reference expansion line A1 in the h-s diagram to the LP-turbine-power-calculating-means 21 and causes the LP-turbine-power-calculating-means 21 to execute recalculation to thereby correct the measured power value $W_{LPact}$ of the first LP turbine 45a, the second LP turbine 45b, and the third LP turbine 45c.

In this case, in step S16, the LP-turbine-power-calculating-means 21 adds the variation calculated based on the Newton's method to the efficiency of the reference expansion line A1 of the first LP turbine 45a, the second LP turbine 45b, and the third LP turbine 45c to thereby correct the reference expansion line A1. Then, the LP-turbine-power-calculating-means 21 calculates the power of the first LP turbine 45a, the second LP turbine 45b, and the third LP turbine 45c again based on the corrected reference expansion line A1.

Thus, the LP-turbine-power-calculating-means 21 repeats calculating the power of the first LP turbine 45a, the second LP turbine 45b, and the third LP turbine 45c until the ratio between the measured power value $W_{LPact}$ of the first LP turbine 45a, the second LP turbine 45b, and the third LP turbine 45c and the calculated power value $W_{LPcal}$ of the first LP turbine 45a, the second LP turbine 45b, and the third LP turbine 45c becomes within the threshold value $\varepsilon_{LP}$.

Then, the LP-turbine-power-correcting-means 22 sends an instruction to calculate one internal efficiency $\eta_{LP}$ of the first LP turbine 45a, the second LP turbine 45b, and the third LP turbine 45c to the LP-turbine-internal-efficiency-calculating-means 23 if it is determined that the ratio between the measured power value $W_{LPact}$ of the first LP turbine 45a, the second LP turbine 45b, and the third LP turbine 45c and the calculated power value $W_{LPcal}$ of the first LP turbine 45a, the second LP turbine 45b, and the third LP turbine 45c is within the threshold value $\varepsilon_{LP}$.

Thus, in step S27, the LP-turbine-internal-efficiency-calculating-means 23 calculates the corresponding total

internal efficiency $\eta_{LP}$ of the first LP turbine 45a, the second LP turbine 45b, and the third LP turbine 45c based on the stage group efficiency, which is received from the LP-turbine-power-calculating-means 21, of each stage group of the first LP turbine 45a, the second LP turbine 45b, and the third LP turbine 45c in response to the instruction to calculate the internal efficiency $\eta_{LP}$ of the first LP turbine 45a, the second LP turbine 45b, and the third LP turbine 45c from the LP-turbine-power-correcting-means 22 in step S27.

The internal efficiency $\eta_{LP}$ of the first LP turbine 45a, the second LP turbine 45b, and the third LP turbine 45c may be defined as a ratio between the total value $\Sigma$ (UE) of the effective heat drops in the stage groups and the total value E (AE) of the adiabatic heat drops in the stage groups. Therefore, the LP-turbine-internal-efficiency-calculating-means 23 calculates the ratio between the total value $\Sigma$ (UE) of the effective heat drops in the stage group and the total value E (AE) of the adiabatic heat drops in the stage groups based on Expression (24) to determine the internal efficiency $\eta_{LP}$ of the first LP turbine 45a, the second LP turbine 45b, and the third LP turbine 45c.

$$\eta_{LP} \equiv \Sigma \ (UE)/\Sigma \ (AE) \ ... \ (24)$$

However, the internal efficiency $\eta_{LP}$ of the first LP turbine 45a, the second LP turbine 45b, and the third LP turbine 45c can be arbitrarily defined based on the effective heat drop UE and the adiabatic heat drop AE in each stage group instead of calculation by Expression (24).

The LP-turbine-internal-efficiency-calculating-means 23 sends the calculated internal efficiency $\eta_{LP}$ of the first LP turbine 45a, the second LP turbine 45b, and the third LP turbine 45c to the plant-state-optimizing-means 24, and requests the LP-turbine-selecting-means 20 to select the LP turbine 45 whose internal efficiency $\eta_{LP}$ is next calculated.

Thus, in step S28, the LP-turbine-selecting-means 20 determines whether or not there is the LP turbine 45 whose internal efficiency $\eta_{LP}$ should be calculated. If there is the LP turbine 45 whose internal efficiency $\eta_{LP}$ should be calculated, the LP-turbine-selecting-means 20 selects the LP turbine 45 to request the LP-turbine-power-calculating-means 21 to calculate the power.

Incidentally, herein, the calculation is executed on the assumption that the internal efficiencies $\eta_{LP}$ of the first LP turbine 45a, the second LP turbine 45b, and the third LP turbine 45c are equal to each other. Thus, the LP-turbine-selecting-means 20 determines that there is no LP turbine 45 whose internal efficiency $\eta_{LP}$ should be calculated, and notifies the data-calculating-means 19 of the determination result.

Next, in step S29, the data-calculating-means 19 calculates the enthalpy of the condensate water at the inlet of the drain condenser 53 using the acquired heat quantity of the drain lead from the drain tank 60 to the drain condenser 53 through the heat balance calculation. At this time, necessary data such as the temperature or pressure of feedwater is input from the plant data measuring system 30 to the data-calculating-means 19.

Next, in step S30, the data-calculating-means 19 calculates a balance of the drain and steam of the condenser 49, and a balance of the condensate water between the condenser 49, the gland steam vaporizer 56, and the condensate storage tank 55 to calculate the flow rate of the condensate water at the outlet of the condenser 49, and the flow rate $G_{H1}$ of the condensate water lead to the reactor 40, that is, the feedwater. Further, the data-calculating-means 19 executes the heat balance calculation on each heat exchanger of each condensate system (not shown).

Here, the flow rate of the steam lead to the condenser 49 may be calculated based on the flow rate of the steam at each outlet 82 of the first LP turbine 45a, the second LP turbine 45b, and the third LP turbine 45c. Further, data that cannot be obtained through the heat balance calculation is measured by the plant data measuring system 30 and input to the data-calculating-means 19.

Then, the data-calculating-means 19 sends the calculated flow rates of the condensate water and feedwater to the plant-state-optimizing-means 24, and requests the plant-state-optimizing-means 24 to determine whether or not the plant state is optimized.

Next, in step S31, the plant-state-optimizing-means 24 executes the optimized calculation of the calculated values of the internal efficiencies $\eta$HP and $\eta_{LP}$ of the HP turbine 44 and the first LP turbine 45a, the second LP turbine 45b, and the third LP turbine 45c received from the HP-turbine-internal-efficiency-calculating-means 17 and the LP-turbine-internal-efficiency-calculating-means 23, the calculated values of the flow rates of the condensate water or feedwater received from the data-calculating-means 19, the internal efficiency $\eta$RFPT of the RFP turbine 54, and the heat quantity received by the steam in the reactor 40 in response to the request from the data-calculating-means 19. That is, the plant-state-optimizing-means 24 calculates probability distributions on the deviation of the calculated values from the respective reference values for the measured values in order to optimize the calculated values including the flow rate of the feedwater with a preset accuracy.

Here, reference values of the flow rates of the condensate water and feedwater are set to the measured values of the condensate water and the feedwater acquired by the feed-and-condensate-water-flow rate sensor 28. A reference value of the heat quantity received by the steam in the reactor 40 is set to the measured value measured by the plant data measuring system 30. Design values may be used as the reference values of the internal efficiencies $\eta_{HP}$ and $\eta_{LP}$ of the HP turbine 44 and the first LP turbine 45a, the second LP turbine 45b, and the third LP turbine 45c, and the internal efficiency $\eta_{RFPT}$ of the RFP turbine 54.

At this time, the plant-state-optimizing-means 24 determines that optimization is impossible if the calculated values including the flow rate of the feedwater are insufficient for acquiring such probability distributions that satisfy desired accuracies. In this case, the plant-state-optimizing-means 24 requests the feed-and-condensate-water-flow-rate-setting-means 13 to reset the flow rate of the feedwater such that the deviations of the calculated values from the reference values is smaller.

Whether or not the calculated values including the flow rate of the feedwater are sufficient may be determined based on an arbitrary method, and more specifically, may be determined based on whether or not the data width of each deviation on the probability distributions is larger than the required accuracy $\varepsilon$ for each probability distribution.

To that end, the process of steps S1 to S31 is repeated, and finally, deviations of the calculated values including the flow rate of the feedwater from the respective reference values are calculated to obtain the probability distributions.

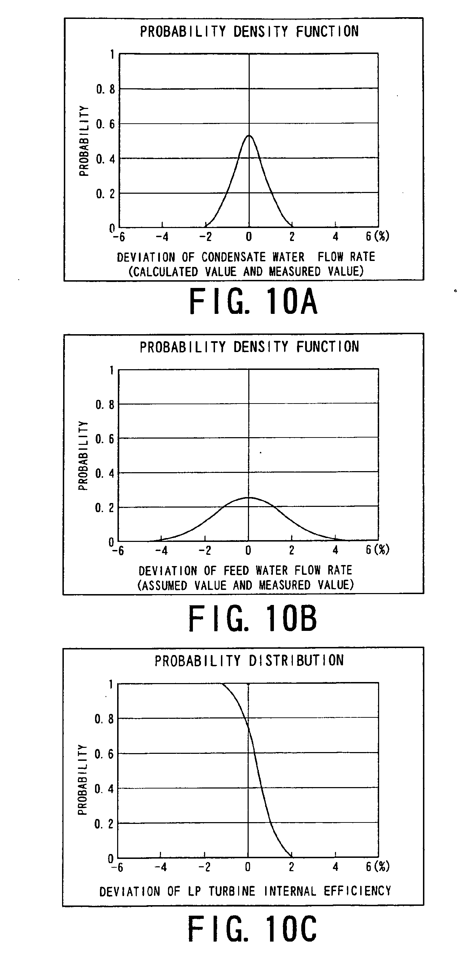

Figs. 10A to 10C show an example of the probability distribution in the optimized calculation.

Fig. 10A shows the probability distribution of the condensate water flow rate, Fig. 10B shows the probability distribution of the feedwater flow rate, and Fig. 10C shows the probability distribution of the internal efficiency $\eta_{LP}$ of the first LP turbines 45a, 45b and 45c. In Figs. 10A to 10C, the abscissa represents the deviation of each data, and the ordinate represents the probability.

As shown in Figs. 10A to 10C, each probability distribution is assumed to the normal distribution or a probability distribution obtained by integrating the normal distribution statistically. Then, such calculated values that total probability obtained by multiplying the probabilities is maximal are used as the optimized calculated values.

Then, the plant-state-optimizing-means 24 calculates the optimized calculated values including flow rate of the feedwater and then determines that the optimized calculation is completed. Then, the optimized calculated values of the internal efficiencies $\eta_{HP}$ and $\eta_{LP}$ of the HP turbine 44 and the first LP turbine 45a, the second LP turbine 45b, and the third LP turbine 45c are supplied to the performance-deteriorating-element-specifying-means 25 from the plant-state-optimizing-means 24.

Next, in step S32, the performance-deteriorating-element-specifying-means 25 calculates differences between calculated values, which are received from the plant-state-optimizing-means 24, and designed values of the internal efficiency $\eta_{HP}$ of the HP turbine 44 and the internal efficiency $\eta_{LP}$ of the first LP turbine 45a, the second LP turbine 45b, and the third LP turbine 45c, and specifies an element having a larger value of the product of the difference between the calculated value and the designed value by the preset degree of distribution as the element that deteriorates performance of the nuclear power plant 26.

That is, the performance-deteriorating-element-specifying-means 25 multiplies the internal efficiency drop as a difference between the calculated value and the designed value of the internal efficiency $\eta_{HP}$ of the HP turbine 44 and the internal efficiency drop as a difference between the calculated value and the designed value of the internal efficiency $\eta_{LP}$ of the first LP turbine 45a, the second LP turbine 45b, and the third LP turbine 45c by the respective digitalized degrees of contribution at which the HP turbine 44 and the first LP turbine 45a, the second LP turbine 45b, and the third LP turbine 45c influence the efficiency of the nuclear power plant 26.

Next, the performance-deteriorating-element-specifying-means 25 compares the product of the internal efficiency drop by the degree of contribution of the HP turbine 44 with the product of the internal efficiency drop by the degree of contribution in the first LP turbine 45a, the second LP turbine 45b, and the third LP turbine 45c to determine which product is larger. Further, the performance-deteriorating-element-specifying-means 25 displays the determination result on the output device 12 such as a monitor.

Incidentally, it is possible to determine whether or not elements other than the HP turbine 44 and the first LP turbine 45a, the second LP turbine 45b, and the third LP turbine 45c are the elements that deteriorate performance of the nuclear power plant 26. For example, the respective degrees of contribution of the heaters 51a to 51f, the RFP turbine 54, the reactor feedwater pump 52, and the condenser 49 are set. Further, additionally calculated performance values and calculated values of internal efficiencies of the heaters 51a to 51f, the RFP turbine 54, the reactor feedwater pump 52, and the condenser 49 are input. Then, the respective degrees of contribution may be multiplied by the corresponding performance drops as differences between the designed performance values and the calculated performance value, or between the designed internal efficiency and the calculated internal efficiency of the heaters 51a to 51f, the RFP turbine 54, the reactor feedwater pump 52, and the condenser 49 to compare the products with the performance drops of the HP turbine 44 and the first LP turbine 45a, the second LP turbine 45b, and the third LP turbine 45c.

Incidentally, the internal efficiency drop or performance drop may be a difference between a calculated value and data as a reference such as a performance experiment value as well as the designed value.

According to the nuclear power plant thermal efficiency diagnostic system 10, it is possible to accurately calculate each of the internal efficiencies $\eta_{HP}$ and $\eta_{LP}$ of the HP turbine 44 and the first LP turbine 45a, the second LP turbine 45b, and the third LP turbine 45c in the nuclear power plant 26 to diagnose the performance. Thus, according to the nuclear power plant thermal efficiency diagnostic system 10, it is possible to apply the optimized state evaluating method to the nuclear power plant 26, and specify the elements that deteriorate performance of the nuclear power plant 26. As a result, it is possible to determine whether or not an element deteriorating performance of the nuclear power plant 26 is the HP turbine 44 or the first LP turbine 45a, the second LP turbine 45b, and the third LP turbine 45c, which contributes to improvements in energy efficiency of the nuclear power plant 26.

In particular, the shaft torque sensor 27 measures the powers of the HP turbine 44 and/or the first LP turbine 45a, the second LP turbine 45b, and the third LP turbine 45c to correct the calculated power values $W_{HPcal}$ and $W_{LPcal}$ of the HP turbine 44 and the first LP turbine 45a, the second LP turbine 45b, and the third LP turbine 45c to thereby improve each calculation accuracy of the internal efficiencies $\eta_{HP}$ and $\eta_{LP}$ of the HP turbine 44 and the first LP turbine 45a, the second LP turbine 45b, and the third LP turbine 45c.

In practice, the internal efficiencies $\eta_{Hp}$ and $\eta_{LP}$ of the HP turbine 44 and the first LP turbine 45a, the second LP turbine 45b, and the third LP turbine 45c are calculated by using the nuclear power plant thermal efficiency diagnostic system 10 based on the designed values of elements. In this case, it is determined that the internal efficiency $\eta_{HP}$ of the HP turbine 44 can be acquired with the accuracy of 0.11%, and the internal efficiency $\eta_{LP}$ of the first LP turbine 45a, the second LP turbine 45b, and the third LP turbine 45c can be acquired with the accuracy of 0.05%.

Incidentally, in the nuclear power plant thermal efficiency diagnostic system 10, the shaft torque sensor 27 may be provide to each of the first LP turbine 45a, the second LP turbine 45b, and the third LP turbine 45c as well as the HP turbine 44. In the case of providing the shaft torque sensor 27 for each of the first LP turbine 45a, the second LP turbine 45b, and the third LP turbine 45c, each calculated power value $W_{LPcal}$ of the first LP turbine 45a, the second LP turbine 45b, and the third LP turbine 45c can be obtained, while the shaft torques can be obtained as the respective measured power values thereof.

Further, after calculating the internal efficiency $\eta_{LP}$ of the first LP turbine 45a, the second LP turbine 45b, and the third LP turbine 45c, the internal efficiency $\eta_{HP}$ of the HP turbine 44 may be calculated.

Further, it is possible to calculate the temperature, pressure, and flow rates and the like of the condensate water, the feedwater, the steam, the drain, and the extracted steam through the heat balance calculation and measure these values by the plant data measuring system 30.

Further, a part or all of the shaft torque sensor 27, the condensate-feedwater sensor, and the generator power sensor 29, and the plant data measuring system 30 may be elements of the nuclear power plant thermal efficiency diagnostic system 10.

On the other hand, some of the elements of the nuclear power plant thermal efficiency diagnostic system 10 may be omitted. For example, it is possible to supply the non-optimized calculated internal efficiencies $\eta_{LP}$ and $\eta_{HP}$ of the HP turbine 44 and the first LP turbine 45a, the second LP turbine 45b, and the third LP turbine 45c to the performance-deteriorating-element-specifying-means 25 without providing the plant-state-optimizing-means 24.

Further, as a method of setting a reference power value of the HP turbine 44, the measured power value of the HP turbine 44 is used, but if the accuracy of the shaft torque sensor 27 is about 1% or more, and the measured power value of the HP turbine 44 cannot be obtained with sufficient accuracy, a value based on the designed value may be used. In this case, the plant-state-optimizing-means 24 receives the calculated power value $W_{HPcal}$ of the HP turbine 44 from the HP-turbine-power-calculating-means 15, and receives the calculated power value $W_{LPcal}$ of the first LP turbine 45a, the second LP turbine 45b, and the third LP turbine 45c from the LP-turbine-power-calculating-means 21 to be optimized using the measured power values of the HP turbine 44 and the first LP turbine 45a, the second LP turbine 45b, and the third LP turbine 45c as reference values.

If it is determined that the calculated power value of the HP turbine 44 cannot be optimized, the plant-state-optimizing-means 24 sends a request to correct the dryness of the steam at the outlet 72 of the HP turbine 44 to the HP-turbine-power-calculating-means 15, while it is determined that the calculated power value of the first LP turbine 45a, the second LP turbine 45b, and the third LP turbine 45c cannot be optimized, the plant-state-optimizing-means 24 sends a request to correct a reference expansion line of the h-s diagram to the LP-turbine-power-calculating-means 21.

Further, the nuclear power plant thermal efficiency diagnostic system 10 is not limited to be applied to a BWR (boiling water reactor) having a structure shown in Fig. 2 but may be applied to other kinds of nuclear power plants 26 such as a BWR having a structure different from that of the above BWR or a PWR (pressurized water rector) as long as some kind of sensors acquire desired data to execute energy calculation.

Hence, when the nuclear power plant of which HP turbine 44 is also provided with the drain catchers 87 as shown in Fig. 7 similarly to the LP turbine 45 is a target for applying the nuclear power plant thermal efficiency diagnostic system 10, the HP-turbine-power-calculating-means 15 and the HP-turbine-internal-efficiency-calculating-means 17 may have the functions similar to those of the LP-turbine-power-calculating-means 21 and the LP-turbine-internal-efficiency-calculating-means 23 respectively.

Further, in the nuclear power plant thermal efficiency diagnostic system 10, on calculating the power of the first LP turbine 45a, the second LP turbine 45b, and the third LP turbine 45c, a change in heat quantity of each drain catcher 87 is taken into account, but the power of the first LP turbine 45a, the second LP turbine 45b, and the third LP turbine 45c may be calculated without considering the drain catchers 87 insofar as the required accuracy is satisfied. Further, the total internal efficiency $\eta_{LP}$ of the first LP turbine 45a, the second LP turbine 45b, and the third LP turbine 45c can be defined based on other expression than Expression (24).

For example, in the case where two extraction ports, first and second extraction ports, are provided to each of the first LP turbine 45a, the second LP turbine 45b, and the third LP turbine 45c, and the a change in the heat quantity of each drain catcher 87 is not considered, the power $W_{LP}$ of the first LP turbine 45a, the second LP turbine 45b, and the third LP turbine 45c is expressed by Expression (25).

$$W_{LP} = \Delta h_{LP1ad} \cdot \eta_{LP} \cdot G_{LP} + \Delta h_{LP2ad} \cdot \eta_{LP} \cdot (G_{LP} - G_{EXT1}) + \Delta h_{LP3ad} \cdot \eta_{LP} \cdot (G_{LP} - G_{EXT1}$$

$$- G_{EXT2})$$

$$\dots (25)$$

Where

$\Delta h_{LP1ad}$: adiabatic heat drop of LP turbine (inlet-first extraction port)
$\Delta h_{LP2ad}$: adiabatic heat drop of LP turbine (first extraction port-second extraction port)
$\Delta h_{LP3ad}$: adiabatic heat drop of LP turbine (second extraction port-outlet)
$G_{LP}$: flow rate of steam at inlet of LP turbine
$G_{EXT1}$: flow rate of extracted steam at first extraction port
$G_{EXT2}$: flow rate of extracted steam at second extraction port
$\eta_{LP}$: internal efficiency of LP turbine

The powers $W_{LP}$ of the first LP turbine 45a, the second LP turbine 45b, and the third LP turbine 45c are values corrected by multiplying the products of the LP turbine adiabatic heat drops $\Delta h_{LP1ad}$, $\Delta h_{LP2ad}$, and $\Delta h_{LP3ad}$ by the flow rates of the steam by the LP turbine internal efficiencies $\eta_{LP}$ in consideration of the energy losses consumed in the entropy changes in steam.

That is, each internal side of the first LP turbine 45a, the second LP turbine 45b, and the third LP turbine 45c is divided into three areas at the two extraction ports to calculate the power $W_{LP}$ of the first LP turbine 45a, the second LP turbine 45b, and the third LP turbine 45c. That is, the first term of Expression (25) is a value obtained by multiplying the change of the specific enthalpy of the steam by the LP turbine internal efficiency $\eta_{LP}$. The change of the specific enthalpy of the steam is expressed as a product of the LP turbine adiabatic heat drop $\Delta h_{LP1ad}$ between each inlet and each first extraction port of the first LP turbine 45a, the second LP turbine 45b, and the third LP turbine 45c by flow rate $G_{LP}$ of the steam at the inlet of the LP turbine. In other words, the first term of Expression (25) is a work load of the steam from the inlet to the first extraction port of each of the first LP turbine 45a, the second LP turbine 45b, and the third LP turbine 45c.

Further, a part of the steam is extracted at each first extraction port of the first LP turbine 45a, the second LP turbine 45b, and the third LP turbine 45c, and thus, the flow rate of the steam from the first extraction port to the second extraction port of each of the first LP turbine 45a, the second LP turbine 45b, and the third LP turbine 45c is a value obtained by subtracting the quantity $G_{EXT1}$ of the extracted steam at the first extraction port from the flow rate $G_{LP}$ of the steam at the inlet of the LP turbine. Thus, as indicated by the second term of Expression (25), the workload of the steam from the first extraction port to the second extraction port of each of the first LP turbine 45a, the second LP turbine 45b, and the third LP turbine 45c is calculated by multiplying the adiabatic heat drop $\Delta h_{LP2ad}$ of the LP turbine between the first extraction port and the second extraction port of each of the first LP turbine 45a, the second LP turbine 45b, and the third LP turbine 45c and the flow rate $G_{LP} - G_{EXT1}$ of the steam between the first extraction port and the second extraction port by the internal efficiency $\eta_{LP}$ of the LP turbine.

Likewise, a part of the steam is extracted at each second extraction port of the first LP turbine 45a, the second LP turbine 45b, and the third LP turbine 45c, so the flow rate of the steam between the second extraction port to the outlet of each of the first LP turbine 45a, the second LP turbine 45b, and the third LP turbine 45c is calculated by subtracting quantities $G_{EXT1}$ and $G_{EXT2}$ of the extracted steams at the first extraction port and the second extraction port from the flow rate $G_{LP}$ of the steam at the inlet of the LP turbine. Hence, as indicated by the third term of Expression (25), the work load of the steam from the second extraction port to the outlet of each of the first LP turbine 45a, the second LP turbine 45b, and the third LP turbine 45c is calculated by multiplying the adiabatic heat drop $\Delta h_{LP3ad}$ of the LP turbine between the second extraction port and the outlet of each of the first LP turbine 45a, the second LP turbine 45b, and the third LP turbine 45c and the flow rate $G_{LP} - G_{EXT1} - G_{EXT2}$ of the steam between the second extraction port and the outlet by the internal efficiency $\eta_{LP}$ of the LP turbine.

The internal efficiency $\eta_{LP}$ of the LP turbine is expressed by Expression (26) based on Expression (25).

$$\eta_{LP} = W_{LP}/\{(\Delta h_{LP1ad}+\Delta h_{LP2ad}+\Delta h_{LP3ad})\ G_{LP}\text{-}(\Delta h_{LP2ad}+\Delta h_{LP3ad})\ G_{EXT1}\text{-}\Delta h_{LP3ad}\ \cdot G_{EXT2}\}\ ...\ (26)$$

Incidentally, the calculation accuracy for when the LP-turbine-internal-efficiency-calculating-means 23 calculates the internal efficiency $\eta_{LP}$ of the first LP turbine 45a, the second LP turbine 45b, and the third LP turbine 45c based on Expression (26) can be calculated based on the error propagation expression (27) derived from Expression (26).

$$|\delta\eta_{LP}/\eta_{LP}| = |\delta W_{LP}/W_{LP}|$$

$$+\Delta h_{LP1ad}\ G_{LP}/\{\Delta h_{LP1ad}G_{LP}+\Delta h_{LP2ad}(G_{LP}\cdot G_{EXT1})$$

$$+\ \Delta h_{LP3ad}(G_{LP}\cdot G_{EXT1}\text{-}G_{EXT2})\}|\ \delta\Delta h_{LP1ad}/\Delta h_{LP1ad}|$$

$$+\Delta h_{LP2ad}(G_{LP}\cdot G_{EXT1})/\{\Delta h_{LP1ad}\ G_{LP}+\Delta h_{LP2ad}(G_{LP}\cdot G_{EXT1})$$

$$+\ \Delta h_{LP3ad}(G_{LP}\cdot G_{EXT1}\text{-}G_{EXT2})\}|\ \delta\Delta h_{LP2ad}/\Delta h_{LP2ad}|$$

$$+\Delta h_{LP3ad}(G_{LP}\cdot G_{EXT1}\text{-}G_{EXT2})/\{\Delta h_{LP1ad}\ G_{LP}+\Delta h_{LP2ad}(G_{LP}\cdot G_{EXT1})$$

$$+\ \Delta h_{LP3ad}(G_{LP}\cdot G_{EXT1}\text{-}G_{EXT2})\}|\ \delta\Delta h_{LP3ad}/\Delta h_{LP3ad}|$$

$$+(\Delta h_{LP1ad}+\Delta h_{LP2ad}+\ \Delta h_{LP3ad})\ G_{LP}/\{(\Delta h_{LP1ad}+\Delta h_{LP2ad}+\ \Delta h_{LP3ad})\ G_{LP}$$

$$\text{-}(\Delta h_{LP2ad}+\ \Delta h_{LP3ad})\ G_{EXT1}\text{-}\Delta h_{LP3ad}\ G_{EXT2}\}|\ \delta G_{LP}/\Delta G_{LP}|$$

$$+(\Delta h_{LP2ad}+\ \Delta h_{LP3ad})\ G_{EXT1}/\{(\Delta h_{LP1ad}+\Delta h_{LP2ad}+\ \Delta h_{LP3ad})\ G_{LP}$$

$$\text{-}(\Delta h_{LP2ad}+\ \Delta h_{LP3ad})\ G_{EXT1}\text{-}\Delta h_{LP3ad}\ G_{EXT2}\}|\ \delta G_{EXT1}/\Delta G_{EXT1}|$$

$$+\Delta h_{LP3ad}\ G_{EXT2}/\{(\Delta h_{LP1ad}+\Delta h_{LP2ad}+\ \Delta h_{LP3ad})\ G_{LP}$$

$$\text{-}(\Delta h_{LP2ad}+\ \Delta h_{LP3ad})\ G_{EXT1}\text{-}\Delta h_{LP3ad}\ G_{EXT2}\}|\ \delta G_{EXT2}/\Delta G_{EXT2}|\ ...\ (27)$$

Here, the accuracy of the internal efficiency $\eta_{LP}$ of the first LP turbine 45a, the second LP turbine 45b, and the third LP turbine 45c is calculated by substituting assumptive conditions into Expression (27) and the calculation result is represented by Expression (28).

$$| \delta W_{LP}/W_{LP} | = 0.5 \%$$

$$| \delta \Delta h_{LP1ad}/\Delta h_{LP1ad} | = 0.4 \%$$

$$| \delta \Delta h_{LP2ad}/\Delta h_{LP2ad} | = 0.4 \%$$

$$| \delta \Delta h_{LP3ad}/\Delta h_{LP3ad} | = 0.4 \%$$

$$| \delta G_{LP}/G_{LP} | = 1.0 \%$$

$$| \delta G_{EXT1}/G_{EXT1} | = 5.0 \%$$

$$| \delta G_{EXT2}/G_{EXT2} | = 5.0 \%$$

$$G_{EXT1} \fallingdotseq G_{LP} \cdot 0.1$$

$$G_{EXT2} \fallingdotseq G_{LP} \cdot 0.1$$

$$\Delta h_{LP1ad} \fallingdotseq \Delta h_{LP2ad} \fallingdotseq \Delta h_{LP3ad}$$

$$| \delta \eta_{LP}/\eta_{LP} |$$

$$= \{0.5^2 + (1/2.7 \cdot 0.4)^2 + (0.9/2.7 \cdot 0.4)^2 + (0.8/2.7 \cdot 0.4)^2 + (3/2.7 \cdot 1.0)^2 + (0.2/2.7 \cdot 5.0)^2 + (0.1/2.7 \cdot 5.0)^2\}^{1/2}$$

$$\fallingdotseq 1.3 \%... ((28)$$

INDUSTRIAL APPLICABILITY

The nuclear power plant thermal efficiency diagnostic system, the nuclear power plant thermal efficiency diagnostic program and the nuclear power plant thermal efficiency diagnostic method according to the invention make it possible to specify an element causing deterioration of a power output by making a diagnosis on a thermal efficiency of a nuclear power plant.

**Claims**

1.  A nuclear power plant thermal efficiency diagnostic system comprising:

    a feed-and-condensate-water-flow-rate-setting-means for setting a flow rate of at least one of feedwater and condensate water in a nuclear power plant tentatively ;
    a heat-exchange-on-heater-calculating-means for calculating heat exchange quantities of the feedwater and the condensate water on a heater arranged on a condensate and feedwater pipe of the nuclear power plant in accordance with the flow rate of at least the one of the feedwater and the condensate water, the flow rate being set by the feed-and-condensate-water-flow-rate-setting-means tentatively;
    a HP-turbine-power-calculating-means for acquiring a calculated power value of a high pressure turbine of the nuclear power plant by assuming a dryness on an outlet of the high pressure turbine and performing a heat balance calculation using a heat exchange quantity of either of the feedwater and the condensate water acquired by the heat-exchange-on-heater-calculating-means;
    a HP-turbine-power-correcting-means for making the HP-turbine-power-calculating-means correct the dryness on the outlet of the high pressure turbine to recalculate a power of the high pressure turbine when the calculated power value of the high pressure turbine is out of a threshold set on a basis of a reference power value of the high pressure turbine;

a HP-turbine-internal-efficiency-calculating-means for calculating an internal efficiency of the high pressure turbine based on the calculated power value of the high pressure turbine;

a steam-condition-on-LP-turbine-inlet-calculating-means for setting a condition of a steam on an inlet of a low pressure turbine of the nuclear power plant;

a LP-turbine-power-calculating-means for acquiring a calculated power value of the low pressure turbine by assuming a reference expansion line of the low pressure turbine based on the condition of the steam on the inlet of the low pressure turbine and performing a heat balance calculation using a heat exchange quantity of either of the feedwater and the condensate water acquired by the heat-exchange-on-heater-calculating-means and the assumed reference expansion line of the low pressure turbine, the condition being set by the steam-condition-on-LP-turbine-inlet-calculating-means;

a LP-turbine-power-correcting-means for making the LP-turbine-power-calculating-means correct the reference expansion line of the low pressure turbine to recalculate a power of the low pressure turbine when the calculated power value of the low pressure turbine is out of a threshold set on a basis of a reference power value of the low pressure turbine;

a LP-turbine-internal-efficiency-calculating-means for calculating an internal efficiency of the low pressure turbine based on the calculated power value of the low pressure turbine; and

a performance-deteriorating-element-specifying-means for specifying an element which causes on deterioration of performance of the nuclear power plant based on the internal efficiency of the low pressure turbine calculated by the LP-turbine-internal-efficiency-calculating-means and the internal efficiency of the high pressure turbine calculated by the HP-turbine-internal-efficiency-calculating-means.

2. A nuclear power plant thermal efficiency diagnostic system according to claim 1,
wherein the HP-turbine-power-correcting-means is configured to use a measured power value of the high pressure turbine as the reference power value of the high pressure turbine and the LP-turbine-power-correcting-means is configured to use a measured power value of the low pressure turbine as the reference power value of the low pressure turbine.

3. A nuclear power plant thermal efficiency diagnostic system according to claim 1,
further comprising a shaft torque sensor for measuring a shaft torque of at least one of the high pressure turbine and the low pressure turbine,
wherein the HP-turbine-power-correcting-means is configured to use a measured shaft torque value of the high pressure turbine acquired by the shaft torque sensor as the reference power value of the high pressure turbine and the LP-turbine-power-correcting-means is configured to use a measured shaft torque value of the low pressure turbine acquired by the shaft torque sensor as the reference power value of the low pressure turbine.

4. A nuclear power plant thermal efficiency diagnostic system according to claim 1,
further comprising a plant-state-optimizing-means for determining whether the internal efficiency of the low pressure turbine, the internal efficiency of the high pressure turbine, a calculated value of a flow rate of the feedwater and a calculated value of a flow rate of the condensate water are optimized based on the internal efficiency of the low pressure turbine calculated by the LP-turbine-internal-efficiency-calculating-means, the internal efficiency of the high pressure turbine calculated by the HP-turbine-internal-efficiency-calculating-means, the calculated value of the flow rate of the feedwater, the calculated value of the flow rate of the condensate water, a reference value of the internal efficiency of the low pressure turbine, a reference value of the internal efficiency of the high pressure turbine, a reference value of the flow rate of the feedwater and a reference value of the flow rate of the condensate water and making the feed-and-condensate-water-flow-rate-setting-means reset a flow rate of either of the feedwater and the condensate water tentatively in case of determining that an optimization is incomplete.

5. A nuclear power plant thermal efficiency diagnostic system according to claim 1,
further comprising a plant-state-optimizing-means for determining whether the internal efficiency of the low pressure turbine, the internal efficiency of the high pressure turbine, a calculated value of a flow rate of the feedwater, a calculated value of a flow rate of the condensate water and a calculated value of a heat receiving quantity of steam at a nuclear reactor are optimized based on the internal efficiency of the low pressure turbine calculated by the LP-turbine-internal-efficiency-calculating-means, the internal efficiency of the high pressure turbine calculated by the HP-turbine-internal-efficiency-calculating-means, the calculated value of the flow rate of the feedwater, the calculated value of the flow rate of the condensate water, the calculated value of the heat receiving quantity of the steam at the nuclear reactor, a reference value of the internal efficiency of the low pressure turbine, a reference value of the internal efficiency of the high pressure turbine, a reference value of the flow rate of the feedwater, a reference value of the flow rate of the condensate water and a reference value of the heat receiving quantity of the steam at the nuclear reactor and making the feed-and-condensate-water-flow-rate-setting-means reset a flow rate of either of the feedwater and the condensate water tentatively in case of determining that an optimization is incomplete.

6. A nuclear power plant thermal efficiency diagnostic system according to claim 1,
further comprising a plant-state-optimizing-means for determining whether the internal efficiency of the low pressure turbine, the internal efficiency of the high pressure turbine, a calculated value of a flow rate of the feedwater, a calculated value of a flow rate of the condensate water and an internal efficiency of a turbine for driving a reactor feedwater pump are optimized based on the internal efficiency of the low pressure turbine calculated by the LP-turbine-internal-efficiency-calculating-means, the internal efficiency of the high pressure turbine calculated by the HP-turbine-internal-efficiency-calculating-means, the calculated value of the flow rate of the feedwater, the calculated value of the flow rate of the condensate water, the internal efficiency of the turbine for driving the reactor feedwater pump, a reference value of the internal efficiency of the low pressure turbine, a reference value of the internal efficiency of the high pressure turbine, a reference value of the flow rate of the feedwater, a reference value of the flow rate of the condensate water and a reference value of the internal efficiency of the turbine for driving the reactor feedwater pump and making the feed-and-condensate-water-flow-rate-setting-means reset a flow rate of either of the feedwater and the condensate water tentatively in case of determining that an optimization is incomplete.

7. A nuclear power plant thermal efficiency diagnostic system according to claim 1,
wherein the LP-turbine-power-calculating-means is configured to calculate the power of the low pressure turbine using a drain quantity caught by a drain catcher arranged in the low pressure turbine.

8. A nuclear power plant thermal efficiency diagnostic system according to claim 1,
wherein the HP-turbine-power-calculating-means is configured to acquire the calculated power value of the high pressure turbine by assuming a reference expansion line of the high pressure turbine and performing the heat balance calculation using the heat exchange quantity of the either of the feedwater and the condensate water acquired by the heat-exchange-on-heater-calculating-means, the reference expansion line of the high pressure turbine and a drain quantity caught by a drain catcher arranged in the high pressure turbine.

9. A nuclear power plant thermal efficiency diagnostic system according to claim 1,
further comprising a plant-state-optimizing-means for performing an optimized calculation of a calculated value of the internal efficiency of the high pressure turbine calculated by the HP-turbine-internal-efficiency-calculating-means, a calculated value of the internal efficiency of the low pressure turbine calculated by the LP-turbine-internal-efficiency-calculating-means, a calculated value of a flow rate of the feedwater, a calculated value of a flow rate of the condensate water statistically using either of normal distribution and probability distribution obtained by integrating the normal distribution so as to minimize a deviation between each calculated value and a corresponding reference value.

10. A nuclear power plant thermal efficiency diagnostic method comprising steps of:

setting a flow rate of at least one of feedwater and condensate water in a nuclear power plant tentatively ;
calculating heat exchange quantities of the feedwater and the condensate water on a heater arranged on a condensate and feedwater pipe of the nuclear power plant in accordance with the flow rate of at least the one of the feedwater and the condensate water, the flow rate being set tentatively;
acquiring a calculated power value of a high pressure turbine of the nuclear power plant by assuming a dryness on an outlet of the high pressure turbine and performing a heat balance calculation using a acquired heat exchange quantity of either of the feedwater and the condensate water ;
correcting the dryness on the outlet of the high pressure turbine to recalculate a power of the high pressure turbine when the calculated power value of the high pressure turbine is out of a threshold set on a basis of a reference power value of the high pressure turbine;
calculating an internal efficiency of the high pressure turbine based on the calculated power value of the high pressure turbine;
setting a condition of a steam on an inlet of a low pressure turbine of the nuclear power plant;
acquiring a calculated power value of the low pressure turbine by assuming a reference expansion line of the low pressure turbine based on the set condition of the steam on the inlet of the low pressure turbine and performing a heat balance calculation using an acquired heat exchange quantity of either of the feedwater and the condensate water and the assumed reference expansion line of the low pressure turbine;
correcting the reference expansion line of the low pressure turbine to recalculate a power of the low pressure turbine when the calculated power value of the low pressure turbine is out of a threshold set on a basis of a reference power value of the low pressure turbine;

calculating an internal efficiency of the low pressure turbine based on the calculated power value of the low pressure turbine; and

specifying an element which causes on deterioration of performance of the nuclear power plant based on the internal efficiency of the low pressure turbine and the internal efficiency of the high pressure turbine.

**11.** A nuclear power plant thermal efficiency diagnostic program allowing a computer to function as:

a feed-and-condensate-water-flow-rate-setting-means for setting a flow rate of at least one of feedwater and condensate water in a nuclear power plant tentatively ;

a heat-exchange-on-heater-calculating-means for calculating heat exchange quantities of the feedwater and the condensate water on a heater arranged on a condensate and feedwater pipe of the nuclear power plant in accordance with the flow rate of at least the one of the feedwater and the condensate water, the flow rate being set by the feed-and-condensate-water-flow-rate-setting-means tentatively;

a HP-turbine-power-calculating-means for acquiring a calculated power value of a high pressure turbine of the nuclear power plant by assuming a dryness on an outlet of the high pressure turbine and performing a heat balance calculation using a heat exchange quantity of either of the feedwater and the condensate water acquired by the heat-exchange-on-heater-calculating-means;

a HP-turbine-power-correcting-means for making the HP-turbine-power-calculating-means correct the dryness on the outlet of the high pressure turbine to recalculate a power of the high pressure turbine when the calculated power value of the high pressure turbine is out of a threshold set on a basis of a reference power value of the high pressure turbine;

a HP-turbine-internal-efficiency-calculating-means for calculating an internal efficiency of the high pressure turbine based on the calculated power value of the high pressure turbine;

a steam-condition-on-LP-turbine-inlet-calculating-means for setting a condition of a steam on an inlet of a low pressure turbine of the nuclear power plant;

a LP-turbine-power-calculating-means for acquiring a calculated power value of the low pressure turbine by assuming a reference expansion line of the low pressure turbine based on the condition of the steam on the inlet of the low pressure turbine and performing a heat balance calculation using a heat exchange quantity of either of the feedwater and the condensate water acquired by the heat-exchange-on-heater-calculating-means and the assumed reference expansion line of the low pressure turbine, the condition being set by the steam-condition-on-LP-turbine-inlet-calculating-means;

a LP-turbine-power-correcting-means for making the LP-turbine-power-calculating-means correct the reference expansion line of the low pressure turbine to recalculate a power of the low pressure turbine when the calculated power value of the low pressure turbine is out of a threshold set on a basis of a reference power value of the low pressure turbine;

a LP-turbine-internal-efficiency-calculating-means for calculating an internal efficiency of the low pressure turbine based on the calculated power value of the low pressure turbine; and

a performance-deteriorating-element-specifying-means for specifying an element which causes on deterioration of performance of the nuclear power plant based on the internal efficiency of the low pressure turbine calculated by the LP-turbine-internal-efficiency-calculating-means and the internal efficiency of the high pressure turbine calculated by the HP-turbine-internal-efficiency-calculating-means.

26

NUCLEAR POWER
PLANT

10

NUCLEAR POWER PLANT THERMAL EFFICIENCY DIAGNOSTIC SYSTEM

28

FEED-AND-CONDENSATE-
WATER FLOW RATE SENSOR

13

FEED-AND-CONDENSATE-WATER
FLOW-RATE-SETTING-MEANS

24

PLANT-
STATE-
OPTIMIZING-
MEANS

30

PLANT DATA
MEASURING
SYSTEM

14

HEAT-EXCHANGE-ON-HEATER-
CALCULATING-MEANS

15

HP-TURBINE-POWER-
CALCULATING-MEANS

16

HP-TURBINE-POWER-
CORRECTING-MEANS

17

HP-TURBINE-INTERNAL-
EFFICIENCY-CALCULATING-MEANS

19

DATA-CALCULATING-MEANS

18

STEAM-CONDITION-ON-LP-TURBINE-
INLET-CALCULATING-MEANS

LP-TURBINE-SELECTING-MEANS

20

21

LP-TURBINE-POWER-CALCULATING-MEANS

27

SHAFT TORQUE
SENSOR

22

LP-TURBINE-POWER-CORRECTING-MEANS

29

GENERATOR
POWER SENSOR

23

LP-TURBINE-INTERNAL-EFFICIENCY-
CALCULATING-MEANS

25

PERFORMANCE-DETERIORATING-
ELEMENT-SPECIFYING-MEANS

INPUT DEVICE

11

OUTPUT DEVICE

12

# FIG. 1

FIG. 2

FIG. 3

FIG. 4

FIG. 5

FIG. 6

**FIG. 7**

START

SETTING A FEED WATER FLOW RATE — S1

CALCULATING THE QUANTITY OF HEAT EXCHANGE BETWEEN FEED WATER AND DRAIN IN EACH HEATER — S2

SETTING AN ASSUMPTIVE DRYNESS ON THE OUTLET OF HP TURBINE — S3

CALCULATING THE DRYNESS ON THE STEAM EXTRACTION POINT IN THE HP TURBINE — S4

CALCULATING THE FLOW RATE OF THE EXTRACTED STEAM TO THE FIRST HEATER — S5

CALCULATING THE EXHAUST LOSS OF THE HP TURBINE — S6

CALCULATING THE POWER OF THE HP TURBINE — S7

$|\text{WHPcal}/F-1| < \varepsilon\text{HP}$ — S8 — NO / YES

CALCULATING THE INTERNAL EFFICIENCY OF THE HP TURBINE — S9

CALCULATING THE EFFICIENCY OF THE MOISTURE SEPARATOR — S10

CALCULATING THE DRAIN QUANTITY AND THE DRYNESS ON THE EXIT OF THE MOISTURE SEPARATOR — S11

CALCULATING THE FLOW RATE OF THE EXTRACTED STEAM TO THE SECOND HEATER — S12

CALCULATING THE INTERNAL EFFICIENCY OF THE RFP TURBINE — S13

CALCULATING THE HEAT RECEIVING QUANTITY IN THE REACTOR — S14

SELECTING A LP TURBINE — S15

ASSUMING A REFERENCE EXPANSION LINE OF THE LP TURBINE — S16

CALCULATING THE RESPECTIVE FLOW RATES OF THE EXTRACTED STEAMS TO THE THIRD HEATER AND THE GLAND STEAM VAPORIZER — S17

CALCULATING THE FLOW RATE OF THE EXTRACTED STEAM TO THE FOURTH HEATER — S18

CALCULATING THE DRAIN QUANTITY IN THE FIRST DRAIN CATCHER — S19

CALCULATING THE DRAIN QUANTITY IN THE SECOND DRAIN CATCHER AND THE FLOW RATE OF THE EXTRACTED STEAM TO THE FIFTH HEATER — S20

CALCULATING THE DRAIN QUANTITY IN THE THIRD DRAIN CATCHER — S21

CALCULATING THE DRAIN QUANTITY IN THE FOURTH DRAIN CATCHER, THE FLOW RATE OF THE EXTRACTED STEAM TO THE SIXTH HEATER AND THE FLOW RATE ON THE DRAIN TANK — S22

CALCULATING THE DRAIN QUANTITY IN THE FIFTH DRAIN CATCHER — S23

CALCULATING THE EXHAUST LOSS OF THE LP TURBINE — S24

CALCULATING THE POWER OF THE LP TURBINE — S25

$|\text{WLPcal}/\text{WLPact}-1| < \varepsilon\text{LP}$ — S26 — NO / YES

CALCULATING THE INTERNAL EFFICIENCY OF THE LP TURBINE — S27

IS ANOTHER LP TURBINE TO BE SELECTED? — S28 — YES / NO

CALCULATING THE ENTHALPY OF THE CONDENSED WATER ON THE INLET OF THE DRAIN CONDENSER — S29

CALCULATING THE FLOW RATES ON THE CONDENSATE SYSTEM — S30

OPTIMIZING A PLANT STATE — S31 — NO / YES

SPECIFYING ELEMENTS THAT DETERIORATE PERFORMANCE — S32

END

## FIG. 8

FIG. 9

PROBABILITY DENSITY FUNCTION

DEVIATION OF CONDENSATE WATER FLOW RATE
(CALCULATED VALUE AND MEASURED VALUE)

FIG. 10A

PROBABILITY DENSITY FUNCTION

DEVIATION OF FEED WATER FLOW RATE
(ASSUMED VALUE AND MEASURED VALUE)

FIG. 10B

PROBABILITY DISTRIBUTION

DEVIATION OF LP TURBINE INTERNAL EFFICIENCY

FIG. 10C

FIG. 11
PRIOR ART

**INTERNATIONAL SEARCH REPORT**

| International application No. |
| --- |
| PCT/JP2004/016280 |

A. CLASSIFICATION OF SUBJECT MATTER
  Int.Cl⁷ G21C17/00, G21D3/00, F01D17/24, F01K23/10, H02P9/04

According to International Patent Classification (IPC) or to both national classification and IPC

B. FIELDS SEARCHED

Minimum documentation searched (classification system followed by classification symbols)
  Int.Cl⁷ G21C17/00-14, G21D1/00-9/00, F01D17/24, F01D25/00, F01K23/10,
         H02P9/04, F22B35/00, 37/02

Documentation searched other than minimum documentation to the extent that such documents are included in the fields searched
  Jitsuyo Shinan Koho          1922-1996   Toroku Jitsuyo Shinan Koho    1994-2005
  Kokai Jitsuyo Shinan Koho    1971-2005   Jitsuyo Shinan Toroku Koho    1996-2005

Electronic data base consulted during the international search (name of data base and, where practicable, search terms used)
  JOIS

C. DOCUMENTS CONSIDERED TO BE RELEVANT

| Category* | Citation of document, with indication, where appropriate, of the relevant passages | Relevant to claim No. |
| --- | --- | --- |
| A | JP 2003-74309 A (Hitachi, Ltd.),<br>12 March, 2003 (12.03.03),<br>Full text; Figs. 1 to 7<br>& US 2003/0043952 A1 | 1-11 |
| A | JP 2001-263006 A (The Tokyo Electric Power Co., Inc.),<br>26 September, 2001 (26.09.01),<br>Full text; Figs. 1 to 9<br>& US 2001/0034582 A1 | 9 |
| A | JP 2002-333376 A (The Tokyo Electric Power Co., Inc.),<br>22 November, 2002 (22.11.02),<br>Full text; Figs. 1 to 23<br>(Family: none) | 3 |

☒ Further documents are listed in the continuation of Box C.    ☐ See patent family annex.

| * Special categories of cited documents: | "T" | later document published after the international filing date or priority date and not in conflict with the application but cited to understand the principle or theory underlying the invention |
| --- | --- | --- |
| "A" document defining the general state of the art which is not considered to be of particular relevance | | |
| "E" earlier application or patent but published on or after the international filing date | "X" | document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" document referring to an oral disclosure, use, exhibition or other means | | |
| "P" document published prior to the international filing date but later than the priority date claimed | "&" | document member of the same patent family |

| Date of the actual completion of the international search<br>02 February, 2005 (02.02.05) | Date of mailing of the international search report<br>22 February, 2005 (22.02.05) |
| --- | --- |
| Name and mailing address of the ISA/<br>Japanese Patent Office | Authorized officer |
| Facsimile No. | Telephone No. |

Form PCT/ISA/210 (second sheet) (January 2004)

**INTERNATIONAL SEARCH REPORT**

International application No.

PCT/JP2004/016280

C (Continuation). DOCUMENTS CONSIDERED TO BE RELEVANT

| Category* | Citation of document, with indication, where appropriate, of the relevant passages | Relevant to claim No. |
|---|---|---|
| A | JP 57-47199 A (Hitachi, Ltd.),<br>17 March, 1982 (17.03.82),<br>Full text; Figs. 1 to 10<br>(Family: none) | 7,8 |

Form PCT/ISA/210 (continuation of second sheet) (January 2004)